# EUROPEAN PATENT APPLICATION

(11) **EP 4 400 813 A1**
(43) Date of publication of application: **17.07.2024**
(21) Application number: 22864460.5
(22) Date of filing: 29.08.2022
(51) Int. Cl.: G01D 21/02, G01D 3/00, G01N 27/26, G01N 27/27, G01N 27/416

(54) **PROGRAM, METHOD, INFORMATION PROCESSING DEVICE, AND SYSTEM**

(30) Priority: 06.09.2021 JP 2021144499
(71) Applicant: Wota Corp., Tokyo, 103-0002 (JP)
(72) Inventor: KONDO, Moe, Tokyo 103-0002 (JP); OMURA, Shuho, Tokyo 103-0002 (JP); MORISHIMA, Ryuji, Tokyo 103-0002 (JP); OKUDERA, Shohei, Tokyo 103-0002 (JP)
(74) Representative: AWA Sweden AB
(86) International application number: PCT/JP2022/032320
(87) International publication number: WO 2023/032877

(57) **Abstract**

A program is executed by a computer including a processor and a memory. The program causes the processor to execute a step of acquiring measurement data from a plurality of sensors configured to measure different items, a step of estimating whether or not there is an abnormality in any of the plurality of sensors, based on the acquired measurement data of the items and measurement data of the items acquired in the past, and a step of correcting measurement data measured by a sensor estimated to have an abnormality, based on the acquired measurement data of the items and the measurement data of the items acquired in the past.

## Description

### FIELD

The present disclosure relates to a program, a method, an information processing apparatus, and a system.

### BACKGROUND

A sensor device capable of easily using functions corresponding to a plurality of measurement items with the single sensor device has been proposed (see Patent Literature 1).

### CITATION LIST

### Patent Literature

Patent Literature 1: Japanese Unexamined Patent Application Publication No. 2020-165737

### SUMMARY

### TECHNICAL PROBLEM

In the technique described in Patent Literature 1, for example, a pH meter is determined to be abnormal (deteriorated) when an asymmetric potential at the time of calibration reaches a predetermined value. However, in such a sensor device, the abnormality can be determined only at the time of calibration, and the pH may not be accurately measured.

An object of the present disclosure is to accurately measure measurement items in a sensor device including a plurality of sensors that measure different items.

### SOLUTION TO PROBLEM

A program is executed by a computer including a processor and a memory. The program causes the processor to execute a step of acquiring measurement data from a plurality of sensors configured to measure different items, a step of estimating whether or not there is an abnormality in any of the plurality of sensors, based on the acquired measurement data of the items and measurement data of the items acquired in the past, and a step of correcting measurement data measured by a sensor estimated to have an abnormality, based on the acquired measurement data of the items and the measurement data of the items acquired in the past.

### ADVANTAGEOUS EFFECTS OF THE INVENTION

According to the present disclosure, measurement items can be accurately measured in a sensor device including a plurality of sensors that measure different items.

### BRIEF DESCRIPTION OF THE DRAWINGS

FIG. 1 is a block diagram showing an example of the overall configuration of a system 1.
FIG. 2 is a schematic diagram showing the appearance of a sensor device 10 shown in FIG. 1 as viewed from the front.
FIG. 3 is a schematic diagram showing a perspective view of the sensor device 10 shown in FIG. 1.
FIG. 4 is a schematic diagram showing members related to a sensor probe of the sensor device 10 shown in FIG. 2 and FIG. 3.
FIG. 5 is a piping system diagram of the sensor device 10 shown in FIG. 2 and FIG. 3.
FIG. 6 is a block diagram showing a functional configuration of the sensor device 10 shown in FIG. 2 and FIG. 3.
FIG. 7 is a schematic diagram showing a configuration of a pH sensor 113.
FIG. 8 is a diagram showing an example of a functional configuration of a server 20.
FIG. 9 is a diagram showing a data structure of a plant table 2021.
FIG. 10 is a diagram showing a data structure of an installation table 2022.
FIG. 11 is a diagram showing a data structure of a plant environment table 2023.
FIG. 12 is a diagram showing a data structure of a measurement table 2024.
FIG. 13 is a diagram showing a data structure of a calibration table 2025.
FIG. 14 is a diagram showing a data structure of a model table 2026.
FIG. 15 is a diagram illustrating an example of an operation in which the sensor device 10 shown in FIG. 1 acquires information on calibration from the server 20.
FIG. 16 is a flowchart showing an example of an operation in which the sensor device 10 shown in FIG. 2 and FIG. 3 performs a calibration process.
FIG. 17 is a flowchart showing an example of an operation of a sensor shown in FIG. 7.
FIG. 18 is a flowchart showing an example of an operation of the sensor device 10 shown in FIG. 6.
FIG. 19 is a flowchart showing an example of an operation of the server 20 shown in FIG. 8.
FIG. 20 is a schematic diagram showing a display example of a terminal device 30 used by the user.
FIG. 21 is a schematic diagram showing a display example of the terminal device 30 used by the user.
FIG. 22 is a schematic diagram showing a display example of the terminal device 30 used by the user.
FIG. 23 is a flowchart showing an example of an operation of the server 20 shown in FIG. 8.
FIG. 24 is a schematic diagram showing a display example of the terminal device 30 used by the user.
FIG. 25 is a flowchart showing an example of an operation of the server 20 shown in FIG. 8.
FIG. 26 is a schematic diagram showing a display example of the terminal device 30 used by the user.
FIG. 27 is a flowchart showing an example of an operation of the server 20 shown in FIG. 8.
FIG. 28 is a block diagram showing a basic hardware configuration of a computer 90.

### DETAILED DESCRIPTION

Hereinafter, an embodiment of the present disclosure will be described with reference to the drawings. In all drawings illustrating the embodiment, common constituent elements are denoted by the same reference numeral, and repeated descriptions will be omitted. It should be noted that the following embodiment does not unduly limit the contents of the present disclosure described in the claims. Not all of the constituent elements described in the present embodiment are essential constituent elements of the present disclosure. In addition, each drawing is a schematic view and is not necessarily illustrated strictly.

### <Overview>

A sensor device according to the present embodiment includes a plurality of sensors that measure different items and, when an abnormality occurs in any of the sensors, estimates the sensor in which an abnormality has occurred, based on current measurement data and past measurement data. The sensor device corrects the measurement value measured by the sensor estimated to have an abnormality.

### <1 Configuration of System>

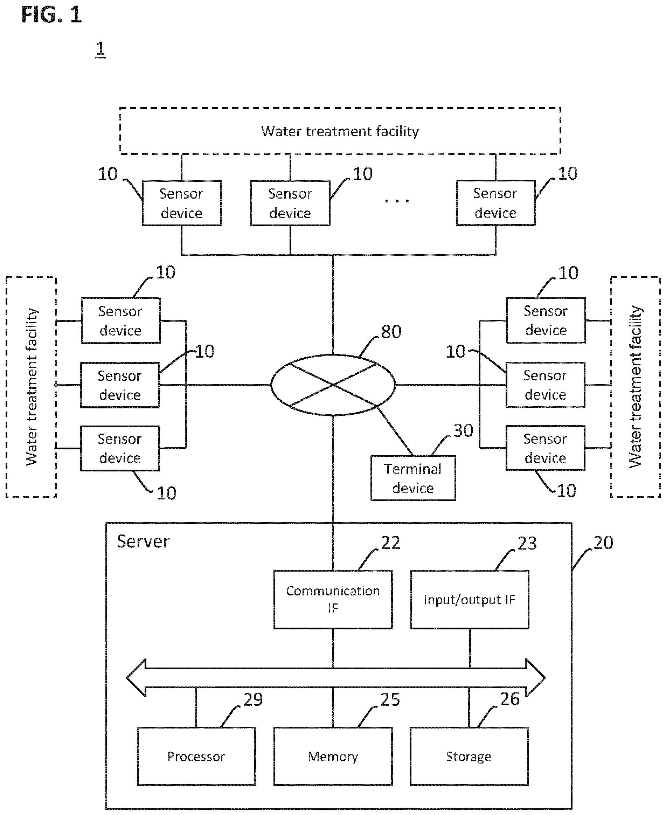

FIG. 1 is a block diagram showing an example of the overall configuration of a system 1. The system 1 shown in FIG. 1 manages, for example, measurement data measured in a water treatment facility. The system 1 includes, for example, a sensor device 10, a server 20, and a terminal device 30. The sensor device 10, the server 20, and the terminal device 30 are connected and communicate via a network 80, for example.

The sensor device 10 shown in FIG. 1 is, for example, an information processing apparatus installed at various locations in a water treatment facility to measure multiple types of water-related items at the installed locations. In the present embodiment, the water treatment facility may include various water treatment facilities such as a groundwater utilization facility, a sewage treatment facility, and a water purification facility. The sensor device 10 detects, for example, at least one of the following components: water supplied to a treatment device constituting the water treatment facility, water being treated in the treatment device, and water drained from the treatment device.

When the water treatment facility is a groundwater utilization facility, the treatment device constituting the water treatment facility is, for example, a raw water tank, a pre-filter, a membrane filter, a treated water tank, a water receiving tank, or the like. When the water treatment facility is a sewage treatment facility, the treatment device is, for example, a sand basin, a primary sedimentation basin, a reaction tank, a final sedimentation basin, a disinfection facility, or the like. When the water treatment facility is a water purification facility, the treatment device is, for example, a water receiving well, a flocculation pond, a sedimentation pond, a filtration pond, or a water purification pond.

In FIG. 1, the system 1 includes the sensor devices 10 installed in three water treatment facilities, but the number of water treatment facilities in which the sensor devices 10 are installed is not limited to three. The number of water treatment facilities in which the sensor devices 10 are installed may be less than three or may be three or more.

Furthermore, the sensor device 10 is not necessarily installed in a water treatment facility. The sensor device 10 may be installed in a water treatment device provided for each colony of a predetermined scale, or may be installed in each individual water treatment device.

In addition, the device that measures the water-related items is not limited to the sensor device 10. For example, the system 1 may include the following devices:
- Device that detects the operating status of the treatment device;
- Device that measures the amount of water used;
- Device that measures pollutant emissions;
- Device that measures the amount of water reused; and
- Device that detects the amount of power used in the treatment device.

The server 20 is, for example, an information processing apparatus that manages data on a water treatment facility, measurement data measured in a water treatment facility, and the like, and evaluates water treatment in a given water treatment facility.

In the present embodiment, a collection of a plurality of devices may be considered as one server. How to distribute a plurality of functions required to realize the server 20 according to the present embodiment to one or more pieces of hardware can be determined as appropriate in consideration of the processing capability of each piece of hardware and/or the specifications required for the server 20 .

The terminal device 30 is an information processing apparatus operated by a user who uses a service provided by the server 20. The terminal device 30 is realized by a stationary personal computer (PC), a laptop PC, or the like. The terminal device 30 may be realized by a mobile terminal such as a smartphone or a tablet.

Each information processing apparatus is constituted by a computer including an arithmetic unit and a storage unit. A basic hardware configuration of the computer and a basic functional configuration of the computer realized by the hardware configuration will be described later. For each of the sensor device 10, the server 20, and the terminal device 30, descriptions overlapping with the following descriptions of the basic hardware configuration of the computer and the basic functional configuration of the computer will be omitted.

### <1.1 Configuration of Sensor Device>

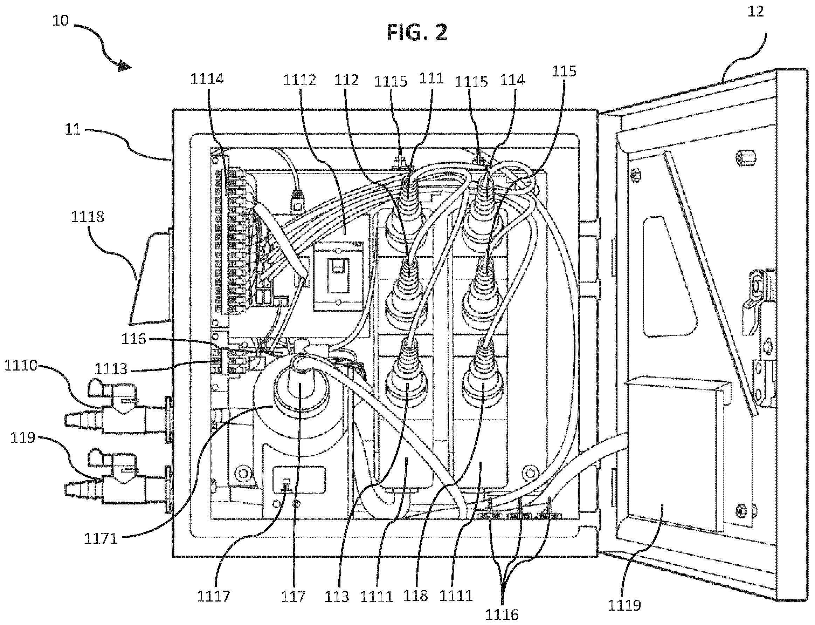

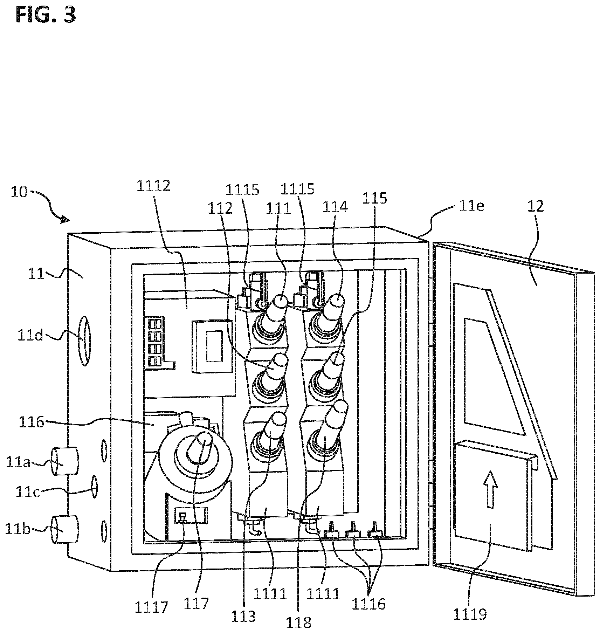

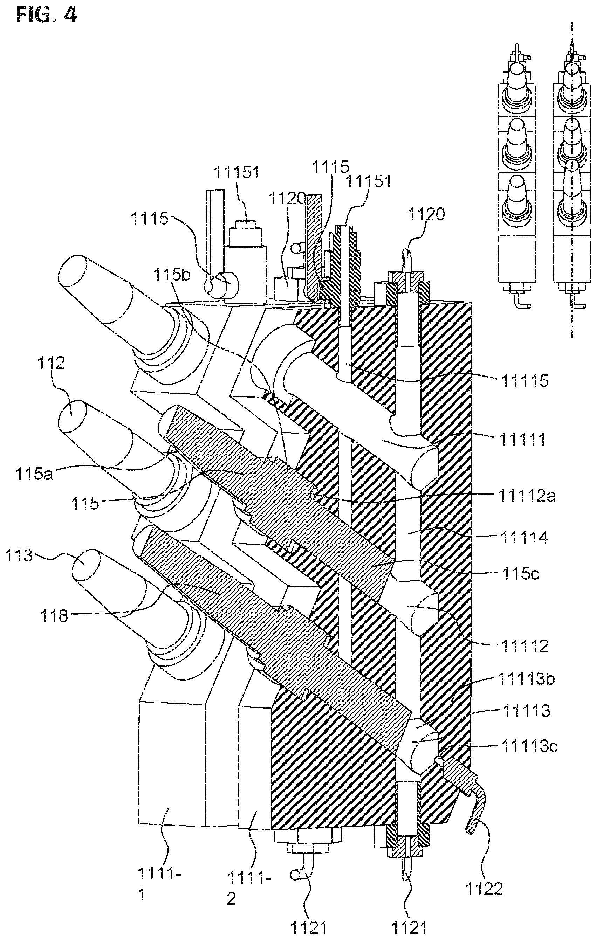

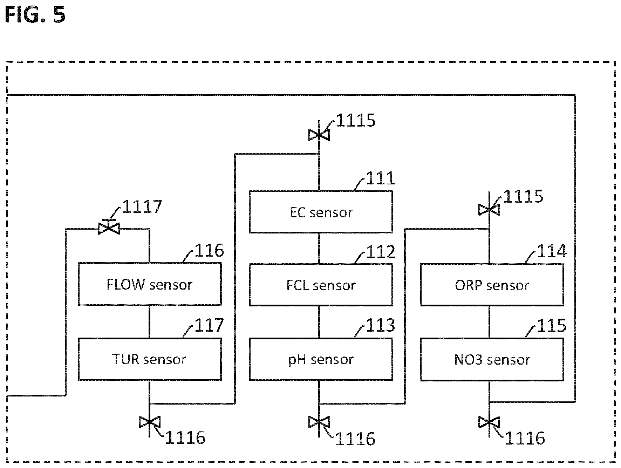

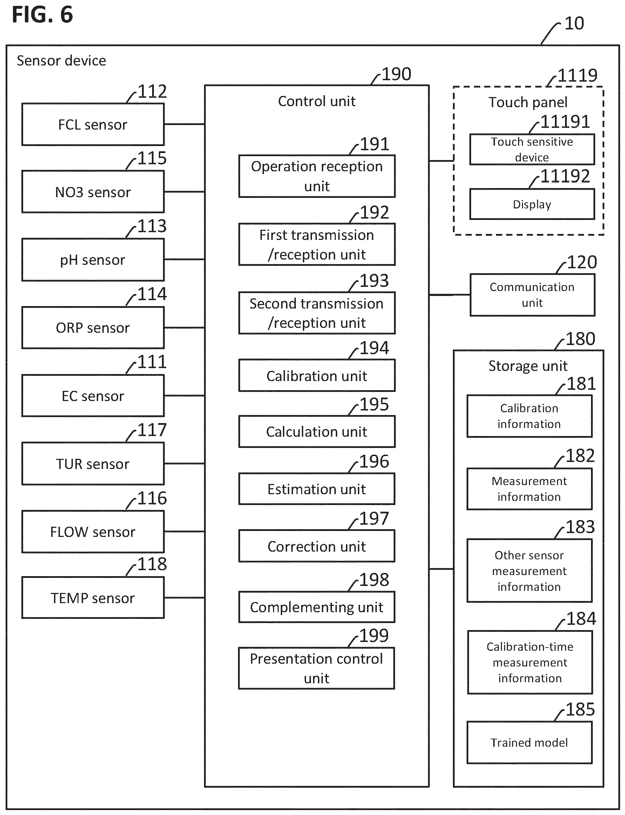

FIG. 2 is a schematic diagram showing the appearance of the sensor device 10 shown in FIG. 1 as viewed from the front. FIG. 3 is a schematic diagram showing a perspective view of the sensor device 10 shown in FIG. 1. FIG. 4 is a schematic diagram showing members related to a sensor probe of the sensor device 10 shown in FIG. 2 and FIG. 3. FIG. 5 is a piping system diagram of the sensor device 10 shown in FIG. 2 and FIG. 3. FIG. 6 is a block diagram showing a functional configuration of the sensor device 10 shown in FIG. 2 and FIG. 3.

The sensor device 10 houses, in a housing 11, members for measuring water quality. A lid 12 that can be opened and closed is attached to the housing 11.

The housing 11 has a substantially rectangular parallelepiped shape with one side open. One side surface (first side surface) of the housing 11 has a piping connection hole 11a for draining sample water, a piping connection hole 11b for supplying sample water, piping connection holes 11c (three in the example of FIG. 3) for power input and signal output, and an intake port 11d. An exhaust port 11e (not shown) is formed on a side surface (second side surface) of the housing 11 facing the first side surface.

A valve 1110 is attached to the piping connection hole 11a. A valve 119 is attached to the piping connection hole 11b. An air filter 1118 is attached to the intake port 11d.

Various sensors 111 to 118, a flow cell 1111, a control box 1112, a power input terminal block 1113, an external output terminal block 1114, an air release valve 1115, a drain valve 1116, and a flow rate adjustment valve 1117 are housed in the housing 11.

The various sensors 111 to 118 include, for example, a electrical conductivity measurement sensor (hereinafter referred to as an EC sensor) 111 including an electrical conductivity cell. The various sensors 111 to 118 include, for example, a residual chloride measurement sensor (hereinafter, referred to as an FCL sensor) 112 for measuring chloride concentration. The various sensors 111 to 118 include, for example, a pH measurement sensor (hereinafter referred to as a pH sensor) 113 including electrodes (a reference electrode and a comparison electrode) for measuring pH. The various sensors 111 to 118 include, for example, an oxidation-reduction potential measurement sensor (hereinafter referred to as an ORP sensor) 114 including electrodes (a reference electrode and a comparison electrode) for measuring oxidation-reduction potential. The various sensors 111 to 118 include, for example, a nitric acid ion measurement sensor (hereinafter referred to as a NO3 sensor) 115 for measuring nitric acid ions. The various sensors 111 to 118 include, for example, a sensor (hereinafter referred to as a FLOW sensor) 116 for measuring the flow rate of water flowing into the sensor device 10. The various sensors 111 to 118 include, for example, a sensor (hereinafter referred to as a TUR sensor) 117 for measuring the turbidity of water flowing into the sensor device 10. The various sensors 111 to 118 include, for example, a sensor (hereinafter, referred to as a TEMP sensor) 118 for measuring the temperature of water flowing into the sensor device 10.

Note that the various sensors used in the sensor device 10 are not limited to these. For example, a sensor for measuring another item may be installed instead of any one of the EC sensor 111, the FCL sensor 112, the pH sensor 113, the ORP sensor 114, and the NO3 sensor 115. Further, for example, any one of the EC sensor 111, the FCL sensor 112, the pH sensor 113, the ORP sensor 114, and the NO3 sensor 115 may not be installed. Further, for example, a sensor for measuring another item may be installed in addition to the EC sensor 111, the FCL sensor 112, the pH sensor 113, the ORP sensor 114, and the NO3 sensor 115. At this time, for example, the number of flow cells 1111 may be increased in accordance with the increase in the number of sensors. To increase the number of flow cells 1111, the capacity of the housing 11 may be increased, for example.

For example, the sensors 111 to 115 may sense at least one of the following items. In addition to the above-described sensors, a sensor that senses at least one of the items listed below may be provided.
(1) Alkalinity, ion concentration, and hardness
(2) Chromaticity, viscosity, and dissolved oxygen
(3) Odor, ammonia nitrogen, nitrate nitrogen, nitrite nitrogen, total nitrogen, total phosphorus, total organic carbon, total inorganic carbon, and total trihalomethane
(4) Detection result of microbial sensor, chemical oxygen demand, and biological oxygen demand
(5) Cyanogen, mercury, oil, and surfactant
(6) Detection result of optical sensor, and detection result of total dissolved solids (TDS) sensor
(7) Mass spectrometry result, fine particles, zeta potential, surface potential

The sensors 111 to 115 and 118 are detachably housed in the flow cell 1111. Here, for example, the shape of the NO3 sensor 115 is described with reference to FIG. 4. Note that the shapes of the sensors 111 to 114 and 118 are the same as the shape of the NO3 sensor 115.

The NO3 sensor 115 includes a grip portion 115a, a flange portion 115b, and a measurement portion 115c. The grip portion 115a is an area that protrudes from the flow cell 1111 when the NO3 sensor 115 is attached to the flow cell 1111. The grip portion 115a is formed, for example, in a shape that can be easily gripped by the user. A cord for power supply and data transmission is connected to the top of the grip portion 115a.

The flange portion 115b is an area that serves as a stopper when the NO3 sensor 115 is inserted into the flow cell 1111. A groove for functioning as a screw is formed in a part of the flange portion 115b on the measurement portion 115c side.

The measurement portion 115c is an area in which a member for measuring water quality is stored. The measurement portion 115c is inserted into a measurement port 11112 formed in the flow cell 1111. The outer diameter of the measurement portion 115c is smaller than the inner diameter of the measurement port 11112.

The flow cell 1111 is a member for bringing sample water into contact with the measurement portions of the sensors 111 to 115 and 118 and causing the sensors 111 to 115 and 118 to accurately measure water quality. In the present embodiment, a flow cell 1111-1 is formed to be able to accommodate the sensors 111 to 113. A flow cell 1111-2 is formed to be able to accommodate the sensors 114, 115, and 118. Note that, in the present embodiment, a configuration is described in which each of the flow cells 1111-1 and 1111-2 can accommodate three sensors. However, the flow cell may be configured to accommodate three or more sensors or less than three sensors.

Here, for example, the shape of the flow cell 1111-2 is described with reference to FIG. 4. Note that the shape of the flow cell 1111-1 is the same as the shape of the flow cell 1111-2. The flow cell 1111-2 is formed such that the grip portions of the sensors 114, 115, and 118 face toward the opening of the housing 11. The flow cell 1111-2 is formed such that the grip portions of the sensors 114, 115, and 118 face upward. This makes it easier for the user of the sensor device 10 to accommodate and remove the sensors 114, 115, and 118. In addition, it is possible to prevent water from leaking from the flow cell 1111-2 when the sensors 114, 115, and 118 are removed.

Inside the flow cell 1111-2, measurement ports 11111, 11112, 11113, a sample water delivery channel 11114, and an air release channel 11115 are formed. Here, for example, the shape of the measurement port 11112 is described with reference to FIG. 4. Note that the shapes of the measurement ports 11111 and 11113 are the same as the shape of the measurement port 11112.

The measurement port 11112 includes a first cylindrical portion 11112a and a second cylindrical portion 11112b. The first cylindrical portion 11112a is formed to open at a predetermined angle toward the front of the housing 11. The inner diameter of the first cylindrical portion 11112a is substantially the same as the outer diameter of the flange portion 115b of the NO3 sensor 115. A groove is formed in the inner wall of the first cylindrical portion 11112a along the circumferential direction. The groove engages with the groove formed in the flange portion 115b, so that the NO3 sensor 115 can be fixed to the measurement port 11112.

The second cylindrical portion 11112b is formed in the same direction as the first cylindrical portion 11112a from the bottom of the first cylindrical portion 11112a. The inner diameter of the second cylindrical portion 11112b is smaller than the inner diameter of the first cylindrical portion 11112a. The inner diameter of the second cylindrical portion 11112b is slightly larger than the outer diameter of the measurement portion 115c of the NO3 sensor 115.

The second cylindrical portion 11112b intersects the water delivery channel 11114 in the vicinity of the bottom of the second cylindrical portion 11112b. The second cylindrical portion 11112b intersects the air release channel 11115 at a position back from the water delivery channel 11114 toward the opening. The water delivery channel 11114 intersects the second cylindrical portion 11112b on the back side of the flow cell 1111-2 with respect to the air release channel 11115. In addition, the water delivery channel 11114 intersects the second cylindrical portion 11112b at a higher position than the air release channel 11115.

A hole 11113c is formed at the bottom of a third cylindrical portion 11113b of the measurement port 11113. A joint 1122 is installed in the hole 11113c. The joint 1122 is connected to, for example, the drain valve 1116 by a hose.

The water delivery channel 11114 is formed to penetrate the flow cell 1111-2 in the vertical direction. A joint 1120 is installed at the upper end of the water delivery channel 11114. The joint 1120 is connected to, for example, a joint 1121 installed at the lower end of the water delivery channel 11114 of the flow cell 1111-1 by a hose. The joint 1121 is installed at the lower end of the water delivery channel 11114. The joint 1121 is connected to, for example, the piping connection hole 11a and the drain valve 1116 by a hose.

The air release channel 11115 is formed to pass through the flow cell 1111-2 upward from the measurement port 11113 as the lower end. The air release valve 1115 is installed at the upper end of the air release channel 11115. The air release valve 1115 can be opened and closed by operating a knob.

The FLOW sensor 116 is connected to the piping connection hole 11b via the flow rate adjustment valve 1117. The flow rate is increased or decreased by turning a flow rate adjustment knob provided on the flow rate adjustment valve 1117. The FLOW sensor 116 measures the flow rate of sample water supplied from the piping connection hole 11b.

The TUR sensor 117 is inserted into a shell 1171. The shell 1171 is filled with sample water supplied from the FLOW sensor 116. The sample water that has passed through the shell 1171 is supplied to the joint 1120 provided above the flow cell 1111-1.

The sensors 111 to 118 are supplied with sample water by the piping system shown in FIG. 5.

A control box 1112 controls the power supply and various operations in the sensor device 10. The control box 1112 includes, for example, a breaker switch, connectors for connection to various sensors, a connector for connection to a communication IF, a fan for cooling the CPU, a connection board for transmitting data to the various sensors 111 to 118 or receiving data from the various sensors 111 to 118, a board for mounting the CPU, and the like.

The lid 12 is provided with a touch panel 1119. The touch panel 1119 includes, for example, a touch sensitive device 11191 and a display 11192. The touch sensitive device 11191 is an example of an input device for a user who operates the sensor device 10 to input an instruction or information. The touch sensitive device 11191 receives an input of an instruction by the user touching the operation surface, accepts the input from the user, and outputs the input received from the user to the control box 1112. The display 141 is an example of an output device that displays data according to the control of the control box 1112. The display 141 is realized by, for example, a liquid crystal display (LCD) or an organic electro-luminescence (EL) display.

As shown in FIG. 6, the sensor device 10 includes a communication unit 120, a touch panel 1119, various sensors 111 to 118, a storage unit 180, and a control unit 190. The sensor device 10 may include a position information sensor so as to automatically detect the position where the sensor device 10 is installed. The position information sensor is, for example, a global positioning system (GPS) module. Further, the position information sensor may detect the current position of the sensor device 10 from the position of the wireless base station to which the sensor device 10 is connected.

The communication unit 120 performs processes such as modulation and demodulation processes for the sensor device 10 to communicate with other devices. The communication unit 120 performs a transmission process on a signal generated by the control unit 190 and transmits the signal to the outside (for example, the server 20). The communication unit 120 performs a reception process on a signal received from outside, and outputs the signal to the control unit 190.

The touch sensitive device 11191 included in the touch panel 1119 is an example of an input device. The input device may be realized by, for example, a keyboard, a mouse, or the like. The input device may be realized by, for example, a microphone for a voice input from the user. The microphone receives a voice input and provides a voice signal corresponding to the voice input to the control unit 190. The input device may include, for example, a reception port that receives an electrical signal input from an external input device.

The display 11192 included in the touch panel 1119 is an example of an output device. The display 11192 displays data according to the control of the control unit 190. The output device is a device for presenting information to the user who operates the sensor device 10. The output device may be realized by, for example, a speaker for an audio output to the user. The speaker converts a voice signal provided from the control unit 190 into audio and outputs the audio to the outside of the sensor device 10.

The storage unit 180 stores data, programs, and the like used by the sensor device 10. The storage unit 180 stores, for example, calibration information 181, measurement information 182, other sensor measurement information 183, calibration-time measurement information 184, and a trained model 185.

The calibration information 181 stores information on calibration of the EC sensor 111, the FCL sensor 112, the pH sensor 113, the ORP sensor 114, the NO3 sensor 115, and the TUR sensor 117. The calibration information 181 stores, for example, information on calibration of the EC sensor 111, the FCL sensor 112, the pH sensor 113, the ORP sensor 114, the NO3 sensor 115, or the TUR sensor 117 transmitted from the server 20. The calibration information 181 may store, for example, information obtained as a result of calibration performed on the EC sensor 111, the FCL sensor 112, the pH sensor 113, the ORP sensor 114, the NO3 sensor 115, or the TUR sensor 117. The calibration information 181 may read and store, for example, information on calibration stored in the EC sensor 111, the FCL sensor 112, the pH sensor 113, the ORP sensor 114, the NO3 sensor 115, or the TUR sensor 117.

In the present embodiment, the information on calibration includes, for example, a reference value when calculating a numerical value, a correction value when calculating a numerical value, and the like.

The measurement information 182 stores information obtained by measurement. The information obtained by measurement includes, for example, first measurement data, second measurement data, and third measurement data.

The first measurement data represents, for example, data measured by a measurement mechanism of the EC sensor 111, the FCL sensor 112, the pH sensor 113, the ORP sensor 114, the NO3 sensor 115, the FLOW sensor 116, the TUR sensor 117, or the TEMP sensor 118.

The second measurement data represents, for example, data obtained by correcting the first measurement data measured by each measurement mechanism using a trained model stored in the sensor.

Specifically, for example, the first measurement data measured by the measurement mechanism of the EC sensor 111 is corrected by a trained model stored in the EC sensor 111 to become the second measurement data. In addition, for example, the first measurement data measured by the measurement mechanism of the FCL sensor 112 is corrected by a trained model stored in the FCL sensor 112 to become the second measurement data. In addition, for example, the first measurement data measured by the measurement mechanism of the pH sensor 113 is corrected by a trained model stored in the pH sensor 113 to become the second measurement data. In addition, for example, the first measurement data measured by the measurement mechanism of the ORP sensor 114 is corrected by a trained model stored in the ORP sensor 114 to become the second measurement data. In addition, for example, the first measurement data measured by the measurement mechanism of the NO3 sensor 115 is corrected by a trained model stored in the NO3 sensor 115 to become the second measurement data. In addition, for example, the first measurement data measured by the measurement mechanism of the FLOW sensor 116 is corrected by a trained model stored in the FLOW sensor 116 to become the second measurement data. In addition, for example, the first measurement data measured by the measurement mechanism of the TUR sensor 117 is corrected by a trained model stored in the TUR sensor 117 to become the second measurement data. In addition, for example, the first measurement data measured by the measurement mechanism of the TEMP sensor 118 is corrected by a trained model stored in the TEMP sensor 118 to become the second measurement data.

The third measurement data represents data calculated from the second measurement data output from each sensor and information on calibration corresponding to each sensor. For example, the third measurement data represents an EC value for the EC sensor 111. The third measurement data represents an FCL value for the FCL sensor 112. The third measurement data represents a pH value for the pH sensor 113. The third measurement data represents an ORP value for the ORP sensor 114. The third measurement data represents a nitric acid concentration for the NO3 sensor 115. The third measurement data represents a turbidity for the TUR sensor 117. For sensors with no calibration information, for example, there is no third measurement data.

The other sensor measurement information 183 stores, for example, information obtained by measurement by another sensor device 10 that measures water of the same water source. Another sensor device 10 that measures water of the same water source can also be referred to as another sensor device 10 installed at a different position in the same water treatment facility.

The calibration-time measurement information 184 stores information measured when the calibration process is performed on the sensor. Specifically, for example, the calibration-time measurement information 184 stores information measured when the calibration process is performed on the EC sensor 111, the FCL sensor 112, the pH sensor 113, the ORP sensor 114, the NO3 sensor 115, and the TUR sensor 117.

The trained model 185 is a model generated by, for example, causing a machine learning model to perform machine learning at the server 20 in accordance with a model training program. The trained model 185 is, for example, a composite function with parameters, which is a combination of a plurality of functions, for performing a predetermined inference based on input data. The composite function with parameters is defined by a combination of a plurality of adjustable functions and parameters. The trained model according to the present embodiment may be any composite function with parameters that satisfies the above-described requirements.

When the trained model 185 is generated using a feedforward multi-layer network, the composite function with parameters is defined as, for example, a combination of a linear relationship between layers using a weighting matrix, a nonlinear relationship (or linear relationship) using an active function in each layer, and a bias. The weighting matrix and bias are referred to as parameters of the multi-layer network. The composite function with parameters changes its form as a function, depending on how the parameters are selected. In the multi-layer network, a function capable of outputting a preferable result from the output layer can be defined by appropriately setting parameters constituting the function.

As the multi-layer network according to the present embodiment, for example, a deep neural network (DNN) which is a multi-layer neural network on which deep learning is performed may be used. As the DNN, for example, a recurrent neural network (RNN) for time-series information or the like may be used.

The trained model 185 is, for example, a model that, when information obtained by measurement is input, outputs whether or not the sensors that have acquired the information include a sensor in which an abnormality has occurred. Specifically, for example, the trained model 185 is a model that, when information obtained by measurement is input, outputs whether or not a sensor that has measured the information has failed. For example, the trained model 185 is trained using a plurality of measurement values acquired by a plurality of sensors at a predetermined cycle as input data and using the presence or absence of a failure occurring in any of the sensors as ground truth output data. That is, the trained model 185 is trained using past measurement information.

For example, the trained model 185 may be trained using a plurality of measurement values acquired by a plurality of sensor devices 10 installed in a facility having the same water source at a predetermined cycle as input data and using the presence or absence of a failure occurring in any of the sensors of the sensor device 10 as ground truth output data. The facility having the same water source means, for example, the same water treatment facility.

When a sensor fails, only the measurement value of the sensor changes suddenly and largely. Then, the largely changed value continues to be measured. According to the trained model 185, it is possible to grasp such a tendency and detect a sensor in which a failure has occurred.

In addition, the trained model 185 is, for example, a model that, when information obtained by measurement is input, outputs whether or not a deviation from the time of calibration has occurred in a sensor that has measured the information. For example, the trained model 185 is trained using a plurality of measurement values acquired by a plurality of sensors at a predetermined cycle as input data and using the presence or absence of a deviation from the time of calibration occurring in any of the sensors as ground truth output data. That is, the trained model 185 is trained using past measurement information.

For example, the trained model 185 may be trained using a plurality of measurement values acquired by a plurality of sensor devices 10 installed in a facility having the same water source at a predetermined cycle as input data and using the presence or absence of a deviation from the time of calibration occurring in any of the sensors of the sensor device 10 as ground truth output data.

When a deviation from the time of calibration occurs, the difference between the measurement value of the sensor and the measurement values of the other sensors gradually changes. According to the trained model 185, it is possible to grasp such a tendency and detect a sensor in which a deviation from the time of calibration has occurred.

The trained model 185 may be trained by combining at least any of the above contents.

The trained model 185 is re-trained at the server 20, for example, with reference to newly accumulated data.

The control unit 190 controls the operation of the sensor device 10. For example, the control unit 190 operates in accordance with programs stored in the storage unit 180 to function as an operation reception unit 191, a first transmission/reception unit 192, a second transmission/reception unit 193, a calibration unit 194, a calculation unit 195, an estimation unit 196, a correction unit 197, a complementing unit 198, and a presentation control unit 199.

The operation reception unit 191 performs a process of receiving an instruction or information input from the input device. Specifically, for example, the operation reception unit 191 receives information based on an instruction input from the touch sensitive device 131 or the like.

The first transmission/reception unit 192 performs a process for the sensor device 10 to transmit and receive data to and from an external device such as the server 20 in accordance with a communication protocol. Specifically, for example, the first transmission/reception unit 192 transmits at least one piece of information stored in the storage unit 180 to the server 20. In addition, for example, the first transmission/reception unit 192 receives information on calibration from the server 20.

The second transmission/reception unit 193 performs a process for the control unit 190 to transmit and receive data to and from the sensors 111 to 118. Specifically, for example, the second transmission/reception unit 193 receives data output from the sensors 111 to 118. More specifically, for example, the second transmission/reception unit 193 receives the first measurement data and the second measurement data output from the sensors 111 to 118. In addition, for example, the second transmission/reception unit 193 transmits information received from the server 20 to the sensors 111 to 118. The information provided from the server 20 may be, for example, a trained model for each of the sensors 111 to 118.

The calibration unit 194 performs a calibration process for each sensor. For example, the calibration unit 194 performs collective calibration for the sensors 111 to 115 sharing the flow cell 1111. The collective calibration of the sensors 111 to 115 is performed, for example, by filling the flow cell 1111 with each of three types of calibration solutions. The first calibration solution is, for example, ultrapure water to ascertain the baseline. The second calibration solution is, for example, a solution containing a component of an optical system. The third calibration solution is, for example, a solution containing a component that causes a chemical effect. The calibration unit 194 stores information on calibration acquired by the collective calibration of the sensors 111 to 115 in the calibration information 181.

The calibration unit 194 estimates whether or not the calibration process of the sensors 111 to 115 has been successful based on the transition of the measurement value. In the calibration process, when the measurement value is within a predetermined range for a preset period in the measurement using the calibration solution, it is determined that the calibration process has been successful. However, with this specification, it takes time from the start to the end of the calibration. The calibration unit 194 according to the present embodiment stores the transition until the measurement value falls within a predetermined range at each sensor based on past measurement records. The calibration unit 194 estimates whether or not the calibration process has been successful by comparing the stored transition with the transition of the measurement value. The calibration unit 194 may use a trained model trained to output whether or not the calibration process has been successful when the transition of the measurement value is input.

The calibration unit 194 calibrates the TUR sensor 117. For example, the calibration unit 194 estimates whether or not the calibration process of the TUR sensor 117 has been successful based on the transition of the measurement value. The calibration unit 194 stores information on calibration acquired by the calibration of the TUR 117 in the calibration information 181.

In a case where the information on calibration is provided from the server 20 or in a case where the information on calibration is read from the sensors 111 to 115 and 117, the calibration unit 194 does not have to perform the calibration process.

For example, the calibration unit 194 may determine whether or not calibration is necessary based on information obtained by measurement at the sensor device 10. For example, in a case where there is a sensor of which the measurement value changes over time with a different tendency from other sensors, the calibration unit 194 determines that the sensor requires calibration. The calibration unit 194 may determine that calibration is necessary when a predetermined period has elapsed. When the calibration unit 194 determines that calibration is required, the calibration unit 194 automatically performs the calibration process.

The calculation unit 195 performs a process of calculating third measurement data from the second measurement data output from each sensor and information on calibration corresponding to each sensor.

The estimation unit 196 performs a process of estimating whether or not an abnormality has occurred in the sensors 111 to 118. For example, the estimation unit 196 inputs information obtained by measurement of the sensors 111 to 118 to the trained model 185, and outputs whether or not there is an abnormality in the sensors that have detected the measured information. Specifically, for example, the estimation unit 196 inputs information obtained by measurement of the sensors 111 to 118 to the trained model 185, and outputs whether or not a failed sensor is included in the sensors that have detected the measured information and whether or not a sensor that has deviated from the time of calibration is included.

The estimation unit 196 may present the estimation result to the user from the presentation control unit 199.

When a sensor in which a deviation from the time of calibration has occurred is included, the correction unit 197 executes a process of correcting the measurement data of the sensor using the measurement data of the plurality of sensors acquired in the past and the measurement data of the other sensors measured this time.

When a sensor in which a deviation from the time calibration has occurred is included, the correction unit 197 may correct the measurement data of the sensor using the measurement data acquired in the past by a plurality of sensor devices 10 installed in the facility having the same water source and the measurement data measured this time.

When a sensor in which a failure has occurred is included, the complementing unit 198 executes a process of complementing the measurement data of the sensor using the measurement data of the plurality of sensors acquired in the past and the measurement data of the other sensors measured this time.

When a sensor in which a failure has occurred is included, the complementing unit 198 may complement the measurement data of the sensor using the measurement data acquired in the past by a plurality of sensor devices 10 installed in the facility having the same water source and the measurement data measured this time.

The presentation control unit 199 presents information on the processes at the control unit 190 to the user. Specifically, the presentation control unit 199 causes the touch panel 1119 to display information on the processes at the control unit 190. In addition, the presentation control unit 199 causes the terminal device 30 to present information on the processes at the control unit 190 via the communication unit 120. For example, the presentation control unit 199 causes the display unit of the terminal device 30 to display the information. Alternatively, the presentation control unit 199 causes the speaker of the terminal device 30 to output audio.

### <1.2 Configuration of Sensor>

A configuration of the sensors 111 to 115, 117, and 118 will be described. Hereinafter, the configuration of the pH sensor 113 will be described as an example, but the other sensors also have a measurement mechanism and a board, and have the same configuration as the pH sensor 113.

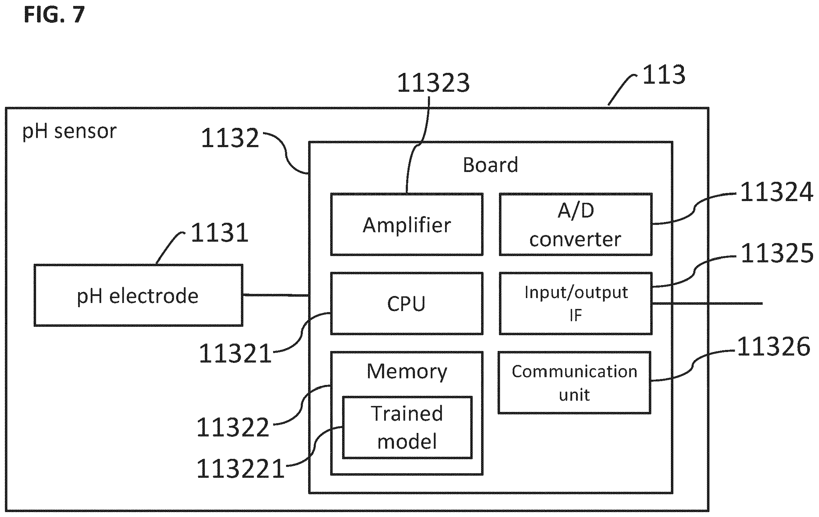

FIG. 7 is a schematic diagram showing a configuration of the pH sensor 113. The pH sensor 113 shown in FIG. 7 includes a pH electrode 1131 and a board 1132. The pH electrode 1131 is an example of the measurement mechanism of the pH sensor 113. The measurement mechanism may include an element for detecting temperature.

The board 1132 is provided with a CPU 11321, a memory 11322, an amplifier 11323, an A/D converter 11324, an input/output IF 11325, and a communication unit 11326.

The memory 11322 is, for example, a non-volatile memory. The memory 11322 stores an algorithm for measuring water quality with the pH electrode 1131, a trained model 113221, and a measurement result.

The trained model 113221 is a model generated by, for example, causing a machine learning model to perform machine learning at the server 20 in accordance with a model training program. The trained model 113221 is a model that, when information obtained by measurement is input, reduces noise included in the input information and outputs the information. For example, the trained model 113221 is trained using a plurality of measurement values that are consecutive in time series and including at least some discontinuous values as input data and using correct values of the discontinuous measurement values included in the input data as ground truth output data. The trained model 113221 may be trained using past measurement information.

The trained model 113221 is re-trained at the server 20, for example, based on newly accumulated data. The re-trained trained model 113221 is transmitted to the sensor device 10 and replaces the trained model 113221 stored in the memory 11322.

The memory 11322 may store information on calibration of the pH sensor 113. For example, the pH sensor 113 may be shipped in a state where the trained model 113221 and information on calibration are stored in the memory 11322. The information on calibration stored in the memory 11322 is, for example, read from the memory 11322 and stored in the storage unit 180 of the sensor device 10 when the pH sensor 113 is connected to the control box 1112.

The amplifier 11323 amplifies the analog signal measured by the pH electrode 1131.

The A/D converter 11324 converts the amplified analog signal into a digital signal. The digital signal represents the first measurement data described above.

The CPU 11321 collectively controls the operation of the pH sensor 113. For example, the CPU 11321 stores the first measurement data in the memory 11322. The CPU 11321 corrects the abnormality included in the first measurement data. In other words, the CPU 11321 reduces noise included in the first measurement data. Specifically, for example, the CPU 11321 inputs the first measurement data to the trained model 113221 to replace the measurement value where a sudden change has occurred with a value estimated from the previous measurement value. The data corrected by the trained model 113221 represents the second measurement data. For example, the CPU 11321 stores the second measurement data in the memory 11322.

The input/output IF 11325 is an interface for connecting to the control box 1112 of the sensor device 10. The input/output IF 11325 transmits, for example, the first measurement data and the second measurement data to the control box 1112. When information on calibration is stored in the memory 11322, the input/output IF 11325 transmits the information on calibration to the control box 1112. The input/output IF 11325 receives information output from the control box 1112, for example, a newly updated trained model.

The communication unit 11326 performs processes such as modulation and demodulation processes for the pH sensor 113 to communicate with other devices. The communication unit 11326 receives information transmitted from the server 20, for example, a newly updated trained model.

### <1.3 Configuration of Server>

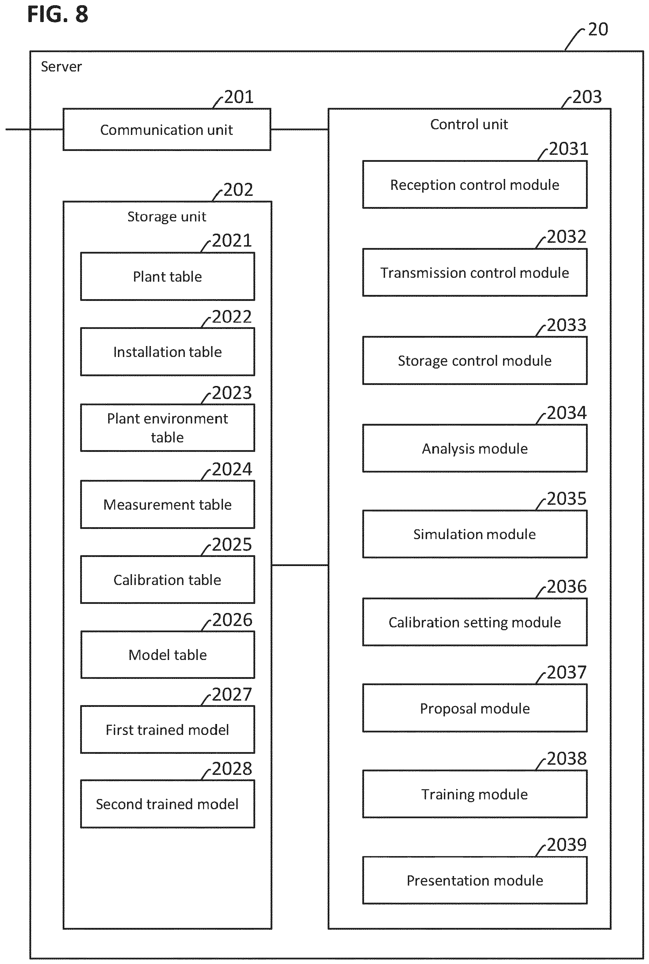

FIG. 8 is a diagram showing an example of the functional configuration of the server 20. As shown in FIG. 8, the server 20 performs functions as a communication unit 201, a storage unit 202, and a control unit 203.

The communication unit 201 performs a process for the server 20 to communicate with an external device.

The storage unit 202 includes, for example, a plant table 2021, an installation table 2022, a plant environment table 2023, a measurement table 2024, a calibration table 2025, a model table 2026, a first trained model 2027, and a second trained model 2028.

The plant table 2021 is a table that stores information on the water treatment facility. Details will be described later.

The installation table 2022 is a table that stores the installation location of the sensor device 10. Details will be described later.

The plant environment table 2023 is a table that stores environment information of the area where the water treatment facility is established. Details will be described later.

The measurement table 2024 is a table that stores data measured by the sensor device 10. Details will be described later.

The calibration table 2025 is a table that stores data on calibration. Details will be described later.

The model table 2026 is a table that manages the versions of the first trained model 2027 and the second trained model 2028. Details will be described later.

The first trained model 2027 and the second trained model 2028 are models generated by, for example, causing a machine learning model to perform machine learning at the server 20 in accordance with a model training program. The first trained model 2027 and the second trained model 2028 are models trained to, when data is input, output predetermined information based on the input data. The first trained model 2027 and the second trained model 2028 are, for example, different trained models that are trained using different pieces of training data according to information to be output.

The first trained model 2027 is, for example, a model that, when receiving an input of information on a given water treatment facility, outputs an analysis result of water treatment in the water treatment facility. Specifically, for example, when information on a given water treatment facility is input, the first trained model 2027 outputs an evaluation of water treatment in the water treatment facility. The output as the evaluation may be an alphabetical rank such as A, B, and C, or may be a score with 100 points as a perfect score. For example, the first trained model 2027 is trained using information on a plurality of water treatment facilities as input data and evaluations on the water treatment facilities as ground truth output data.

A plurality of types of the first trained model 2027 may be created according to the criteria for analysis. For example, in a case where water treatment is evaluated based on the amount of water used, the first trained model 2027 is trained using the evaluation of the amount of water used as the ground truth output data. Also, for example, in a case where water treatment is evaluated based on the amount of pollutants discharged, the first trained model 2027 is trained using the evaluation of the amount of pollutants discharged as the ground truth output data. In addition, for example, in a case where water treatment is evaluated based on the amount of water reused, the first trained model 2027 is trained using the evaluation of the amount of water reused as the ground truth output data. In addition, for example, in a case where water treatment is comprehensively evaluated, as in the case of the environmental consideration score, the first trained model 2027 is trained using the comprehensive evaluation obtained by referring to a plurality of pieces of information on the water treatment facility as the ground truth output data.

In addition, a plurality of types of the first trained model 2027 may be created according to the classifications with similar water quality levels required for water treatment. For example, when a water treatment facility is provided in a hospital, a station, an airport, a factory, a hotel, a simple water supply system, or the like, the water quality level required for water treatment in each water treatment facility is different. Therefore, the water treatment facilities may be classified according to the installation location or the facility in which the water treatment facility is installed. In the case where the water treatment facilities are classified, the first trained model 2027 is trained using information on a plurality of water treatment facilities in the same installation location classification as input data and the evaluations of the water treatment facilities as the ground truth output data.

The information on the water treatment facility includes, for example, the following.
- Raw water quality
- Construction area
- Plant type
- Provided treatment device, treatment details
- Operating status of treatment device
- Amount of water used
- Amount of pollutants discharged
- Amount of water reused
- Chemicals used
- Environmental information (weather, temperature, humidity, wind speed, atmospheric pressure, dust)
- Measurement data from various sensors

The second trained model 2028 is, for example, a model that, when design data and water quality data of a water treatment facility are input, estimates water treatment in the water treatment facility. Specifically, for example, when design data and water quality data of a water treatment facility are input, the second trained model 2028 outputs what water treatment is performed in the designed water treatment facility. For example, the second trained model 2028 is trained using information on a plurality of water treatment facilities as input data and similar water treatment facilities as ground truth output data.

The design data of a water treatment facility input to the second trained model 2028 includes, for example, the following.
- Construction area
- Plant type
- Provided treatment device, treatment details
- Piping structure of water treatment facility
- Location and number of treatment devices to be installed
- Amount of water treated per unit time
- Agents used

The first trained model 2027 and the second trained model 2028 are re-trained at the server 20, for example, also based on newly accumulated data.

The control unit 203 operates in accordance with programs stored in the storage unit 202 to function as a reception control module 2031, a transmission control module 2032, a storage control module 2033, an analysis module 2034, a simulation module 2035, a calibration setting module 2036, a proposal module 2037, a training module 2038, and a presentation module 2039.

The reception control module 2031 controls a process for the server 20 to receive a signal from an external device in accordance with a communication protocol.

The transmission control module 2032 controls a process for the server 20 to transmit a signal to an external device in accordance with a communication protocol. For example, the transmission control module 2032 transmits a trained model to the sensor device 10.

The storage control module 2033 controls a process of storing received data in various tables of the storage unit 202. For example, when information on a given water treatment facility is input to the server 20 at the time of a contract for service provision, the storage control module 2033 stores the input information in the plant table 2021. The storage control module 2033 updates the information stored in the plant table 2021 when receiving information indicating that the equipment of the water treatment facility has been changed.

The control unit 203 receives information on the installation position of the sensor device 10 in the water treatment facility. When the information on the installation position of the sensor device 10 is input, the storage control module 2033 stores the input information in the installation table 2022.

The control unit 203 receives information on the surrounding environment of the location of the water treatment facility. When the information on the surrounding environment is input, the storage control module 2033 stores the input information in the plant environment table 2023.

The control unit 203 receives measurement data measured in the sensor device 10. When the measurement data measured in the sensor device 10 is received, the storage control module 2033 stores the received information in the measurement table 2024.

When information on calibration is set by the calibration setting module 2036, the storage control module 2033 stores the set information in the calibration table 2025 in association with the setting date.

When the trained model is re-trained by the training module 2038, the storage control module 2033 assigns a model ID to the re-trained model and stores the model ID in the model table 2026 together with version information and generation date.

The storage control module 2033 forms a storage area of the storage unit 202 for each water treatment facility, for example. The storage control module 2033 may set the capacity of the storage area based on the content of the contract that the water treatment facility has. For example, the storage control module 2033 allocates a maximum of a first capacity to water treatment facilities that have a free contract. In addition, for example, the storage control module 2033 allocates a maximum of a second capacity, which is larger than the first capacity, to water treatment facilities that have a paid contract. Further, for example, the storage control module 2033 allocates an unlimited storage area capacity to water treatment facilities that have a premium contract.

The storage control module 2033 may limit the measurement items that can be accumulated according to the contract that the water treatment facility has. For example, the storage control module 2033 may not allow data measured by the NO3 sensor 115 to be stored for water treatment facilities that have a free contract. In addition, the storage control module 2033 may limit the period during which data can be accumulated according to the contract that the water treatment facility has. For example, the storage control module 2033 may allow water treatment facilities with a free contract to accumulate data for a shorter period of time than water treatment facilities with a paid contract. In addition, the storage control module 2033 may limit the sampling cycle for accumulating data according to the contract that the water treatment facility has. For example, the storage control module 2033 may sample data at a longer cycle for water treatment facilities with a free contract than for water treatment facilities with a paid contract.

The analysis module 2034 controls a process of analyzing water treatment in the water treatment facility. Specifically, for example, when a predetermined water treatment facility is designated, the analysis module 2034 evaluates water treatment in the designated water treatment facility based on information on the designated water treatment facility. The evaluation is, for example, an example of analysis. More specifically, for example, the analysis module 2034 inputs the information on the designated water treatment facility to the first trained model 2027 and causes the first trained model 2027 to output an evaluation of the water treatment.

The analysis module 2034 may receive a selection from the user regarding a criterion for water treatment analysis. When a criterion for analysis is designated by the user, the analysis module 2034 selects a first trained model 2027 of a type corresponding to the designated criterion, inputs information on the water treatment facility to the selected first trained model 2027, and causes the first trained model 2027 to output an evaluation.

The analysis module 2034 may receive a selection from the user regarding the classification of the installation location of the water treatment facility. When the classification is designated by the user, the analysis module 2034 selects a first trained model 2027 of the type corresponding to the designated classification, inputs information on the water treatment facility to the selected first trained model 2027, and causes the first trained model 2027 to output an evaluation.

The analysis module 2034 may set the version of the first trained model 2027 to be used based on the content of the contract that the water treatment facility has. For example, the analysis module 2034 analyzes water treatment using a first trained model 2027 that is not the latest version for water treatment facilities with a free contract. The first trained model 2027 that is not the latest version represents, for example, a first trained model 2027 of a version several generations before the latest version that is open for use. In addition, for example, the analysis module 2034 analyzes water treatment using the latest version of the first trained model 2027 for water treatment facilities with a paid contract or a premium contract.

In addition, for example, when a given water treatment facility is designated, the analysis module 2034 estimates the power consumption in the designated water treatment facility based on information on the designated water treatment facility. The analysis module 2034 may estimate the power consumption using a trained model.

The simulation module 2035 controls a process of estimating water treatment in an assumed water treatment facility. The estimation is, for example, an example of analysis. Specifically, for example, when design data of an assumed water treatment facility and water quality data of water to be treated in the water treatment facility are input, the simulation module 2035 estimates water treatment in the assumed water treatment facility based on the input design data and water quality data. More specifically, for example, the simulation module 2035 inputs design data of an assumed water treatment facility and water quality data of water to be treated in the water treatment facility to the second trained model 2028, and causes the second trained model 2028 to output information estimating water treatment in the assumed water treatment facility. The simulation module 2035 may, for example, construct a model for water treatment facilities based on input design data and water quality data, and simulate water treatment in an assumed water treatment facility.

The simulation module 2035 may set a version of the second trained model 2028 to be used based on the content of the contract that the water treatment facility has. For example, the simulation module 2035 simulates water treatment using a second trained model 2028 that is not the latest version for water treatment facilities with a free contract. The second trained model 2028 that is not the latest version represents, for example, a second trained model 2028 of a version several generations before the latest version that is open for use. In addition, for example, the simulation module 2035 analyzes water treatment using the latest version of the second trained model 2028 for water treatment facilities with a paid contract or a premium contract.

The calibration setting module 2036 controls a process of calibrating the sensors of the sensor device 10. For example, the calibration setting module 2036 sets information on calibration of the EC sensor 111, the FCL sensor 112, the pH sensor 113, the ORP sensor 114, the NO3 sensor 115, and the TUR sensor 117 of the sensor device 10.

For example, the calibration setting module 2036 determines whether or not calibration is required, based on information obtained by measurement in the sensor device 10. For example, when there is a sensor of which the measurement value changes over time with a different tendency from other sensors, the calibration setting module 2036 determines that the sensor requires calibration. The calibration setting module 2036 may determine that calibration is required, when a predetermined period has elapsed.

When there is a sensor that requires calibration, the calibration setting module 2036 calculates information on calibration for the sensor. The calibration setting module 2036 may calculate the information on calibration in response to a request from the sensor device 10. Specifically, for example, the calibration setting module 2036 calculates the information on calibration from measurement information at the sensor device 10 and information on calibration set in the past, which are stored in the storage unit 202. For example, the calibration setting module 2036 may calculate the information on calibration using a trained model, or may ascertain a given tendency and calculate the information on calibration using the ascertained tendency. At this time, the trained model is trained, for example, using measurement information at the sensor device 10 measured in the past as input data and information on calibration set in the past as ground truth output data.

The proposal module 2037 controls a process of proposing an improvement plan for the water treatment facility. Specifically, for example, the proposal module 2037 proposes an improvement plan for improving the evaluation of water treatment of a given water treatment facility, which is output by the analysis module 2034, to the user. The improvement plan for improving water treatment includes, for example, the following.
- Proposal of a new item to be sensed
- Proposal of a new location to be sensed
- Proposal of operation control

The proposal of a new item to be sensed represents, for example, a proposal of an item to be newly measured among the items related to water. In addition, the proposal of a new location to be sensed represents, for example, a proposal of a new location at which the items related to water to be measured. In addition, the proposal of operation control represents, for example, a proposal of a change in control for operating a treatment device provided in the water treatment facility. The proposal of operation control includes, for example, an adjustment of a threshold value, a change of a signal serving as a trigger, and the like.

For example, the proposal module 2037 may set an improvement plan using a trained model or may set an improvement plan based on the structure of a similar water treatment facility. At this time, the trained model is trained using, for example, information on a water treatment facility as input data and a proposed improvement plan as described above for a given water treatment facility as ground truth output data.

The proposal module 2037 may provide the user with an estimate for implementing the proposal along with the proposal of an improvement plan. In addition, the proposal module 2037 may estimate the operational costs and provide the estimated operational costs to the user along with the proposal of an improvement plan.

The proposal module 2037 may propose an appropriate measurement data transition as an improvement target. For example, the proposal module 2037 may set the improvement target using a trained model, or may set the improvement target based on the transition of the measurement data of a water treatment facility with a high evaluation of water treatment among similar water treatment facilities.

Further, for example, the proposal module 2037 proposes, to the user, an improvement plan for improving the estimated result of water treatment output by the simulation module 2035. The improvement plan for improving the estimated result of water treatment includes, for example, the following.
- Proposal of a new item to be sensed
- Proposal of a new location to be sensed
- Proposal of operation control

In addition, for example, the proposal module 2037 proposes to the user a measure for reducing the power consumption estimated by the analysis module 2034. The measure for reducing the estimated power consumption includes, for example, the following.
- Stopping the devices (pump, blower, turbine, etc.) being driven to operate the treatment device
- Reducing the number of devices being driven to operate the treatment device
- Reducing the output of the devices being driven to operate the treatment device
If a device relating to the proposed measure is directly controllable from the server 20, the measure may be automatically applied to the device.

The training module 2038 controls a process of generating a trained model. Specifically, the training module 2038 generates a trained model by, for example, causing a machine learning model to perform machine learning in accordance with a model training program. More specifically, for example, the training module 2038 generates the first trained model 2027 or the second trained model 2028. In addition, for example, the training module 2038 generates the trained model 185 or the trained model 113221 and transmits it to the sensor device 10 via the communication unit 201.

The training module 2038 also re-trains a trained model at a predetermined cycle, for example. Specifically, for example, the training module 2038 re-trains the first trained model 2027 or the second trained model 2028. For example, when the first trained model 2027 or the second trained model 2028 is re-trained, the training module 2038 stores the trained model generated by re-training in the storage unit 202 as a model different from the model before re-training. Also, for example, the training module 2038 re-trains the trained model 185 or the trained model 113221. The training module 2038 transmits the re-trained trained model 185 or trained model 113221 to the sensor device 10 via the communication unit 201.

The presentation module 2039 controls a process of presenting data managed by the server 20 to the user. Specifically, for example, the presentation module 2039 presents an analysis result created by the analysis module 2034 to the user who has designated a given water treatment facility. The presentation module 2039 also presents a simulation result created by the simulation module 2035 to the user who has requested the simulation of an assumed water treatment facility.

Further, the presentation module 2039 presents a warning (alert) corresponding to the amount of power estimated by the analysis module 2034 to the user. The alert may be displayed as an image or may be output as audio. The presentation module 2039 estimates the increase in operational costs due to not responding to the alert and presents it to the user along with the alert.

When the user associated with a given water treatment facility requests at least one piece of information on the water treatment facility, the presentation module 2039 presents the requested information to the user. The presentation module 2039 presents the requested information in any manner desired by the user. The desired manner includes, for example, a manner using a given statistical rule that enables finding of a feature of the data. This allows the user to ascertain any data in any manner, making it easier to utilize the data.

The presentation module 2039 may set the acceptable data presentation manner based on the content of the contract that the water treatment facility has. For example, the presentation module 2039 limits the tools available to water treatment facilities with a free contract.

### <2 Data Structure>

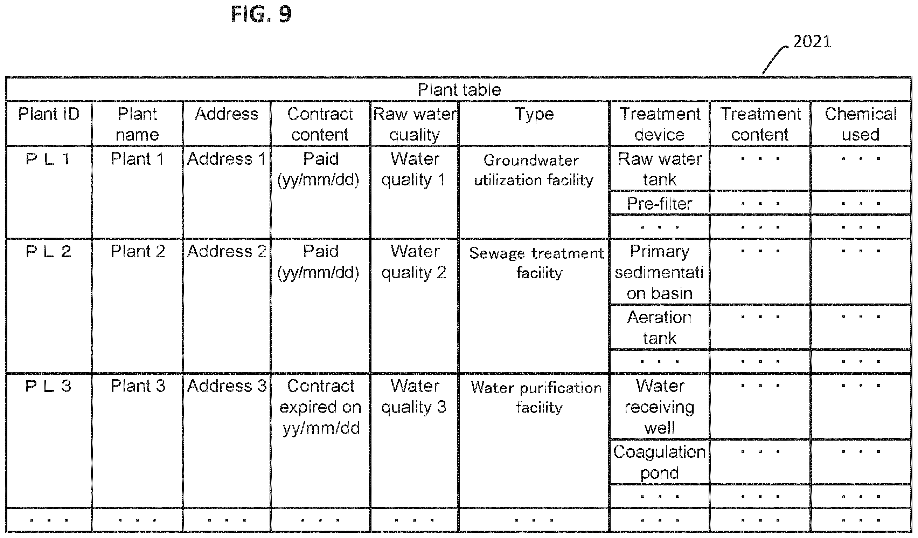

FIG. 9 to FIG. 14 are diagrams showing data structures of the tables stored in the server 20. Note that FIG. 9 to FIG. 14 are examples and do not exclude data that are not described. Even data described in the same table may be stored in separate storage areas in the storage unit 202.

FIG. 9 is a diagram showing a data structure of the plant table 2021. The plant table 2021 shown in FIG. 9 is a table having columns of plant name, address, contract content, raw water quality, type, treatment device, treatment content, and chemical used, with a plant ID as a key. The plant table 2021 may have a column of classification assigned to the location where the water treatment facility is provided.

The plant ID is an item for storing an identifier for uniquely identifying a water treatment facility (water treatment plant). The plant name is an item for storing the name of the water treatment facility. The address is an item for storing the address where the water treatment facility is built. The contract content is an item indicating the content of the contract that the water treatment facility has, such as free, paid, premium membership, or the like. The contract content also stores the date on which the paid contract was canceled, that is, the date on which the contract became a free contract. The raw water quality is an item for storing the quality of water used for water treatment in the area where the water treatment facility is built. The type is an item indicating the type of the water treatment facility. The type includes, for example, a groundwater utilization facility, a sewage treatment facility, a water purification facility, and the like. The treatment device is an item indicting a treatment device installed in the water treatment facility, such as a raw water tank, a pre-filter, and the like. The treatment content is an item indicating the content of treatment performed in the treatment device. The chemical used is an item indicating the name of the chemical used in the treatment.

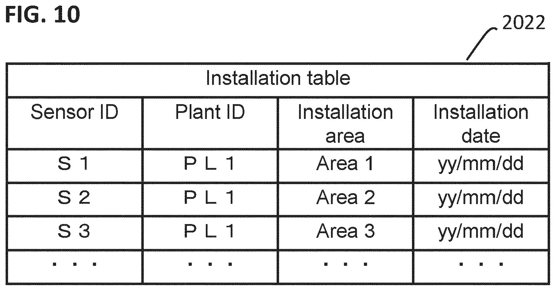

FIG. 10 is a diagram showing a data structure of the installation table 2022. The installation table 2022 shown in FIG. 10 is a table having columns of plant ID, installation area, and installation date, with a sensor ID as a key.

The sensor ID is an item for storing an identifier for uniquely identifying the sensor device 10. The plant ID is an item indicating the water treatment facility in which the sensor device 10 is installed. The installation area is an item for storing the area of the water treatment facility where the sensor device 10 is installed. The area where the sensor device 10 is installed is associated with, for example, an area of the water treatment facility where the treatment device is installed. The installation date is an item for storing the date when the sensor device 10 was installed.

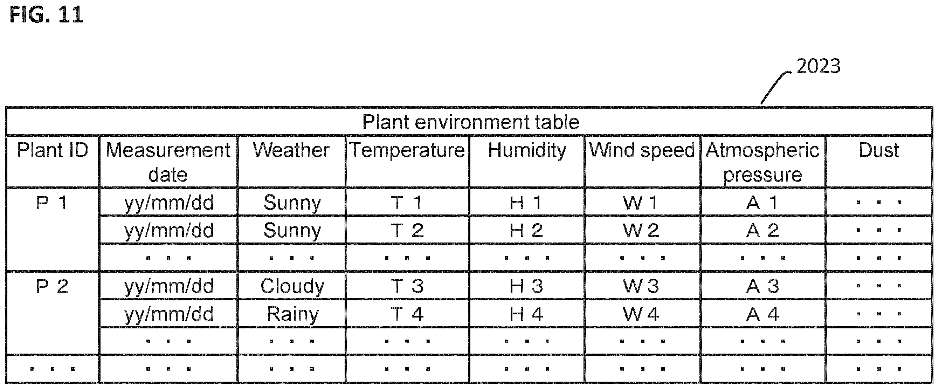

FIG. 11 is a diagram showing a data structure of the plant environment table 2023. The plant environment table 2023 shown in FIG. 11 is a table having columns of measurement date, weather, temperature, humidity, wind speed, atmospheric pressure, and dust, with a plant ID as a key.

The measurement date is an item for storing the date when the environmental information around the water treatment facility was measured. The weather is an item for storing the weather on the measurement date. The temperature is an item for storing the temperature on the measurement date. The weather is an item for storing the humidity on the measurement date. The weather is an item for storing the wind speed on the measurement date. The temperature is an item for storing the atmospheric pressure on the measurement date. The dust is an item for storing the density of dust, such as yellow sand, on the measurement date.

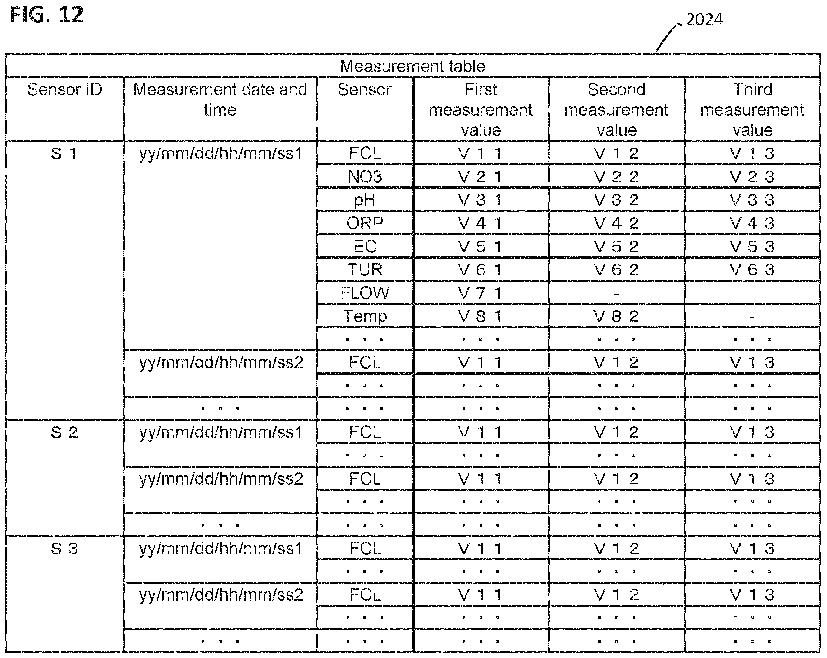

FIG. 12 is a diagram showing a data structure of the measurement table 2024. The measurement table 2024 shown in FIG. 12 is a table having columns of measurement date and time, sensor, first measurement value, second measurement value, and third measurement value, with a sensor ID as a key.

The sensor ID is an item for storing an identifier for uniquely identifying the sensor device 10. The measurement date and time is an item for storing the date and time when the information obtained by measurement is received from the sensor device 10. Specifically, the measurement date and time is an item for storing the date and time when the first measurement data, the second measurement data, and the third measurement data are received from the sensor device 10. The sensor is an item indicating the name for identifying various sensors included in the sensor device 10. The first measurement value is an item for storing the value of the first measurement data measured by the various sensors 111 to 118. The second measurement value is an item for storing the value of the second measurement data obtained by correcting the first measurement data using the trained models stored in the sensors 111 to 115, 117, and 118. The third measurement data is an item for storing the value of the third measurement data calculated from the second measurement data and information on calibration corresponding to each sensor.

The sensors are shown, for example, as "EC" for the EC sensor 111, "FCL" for the FCL sensor 112, "pH" for the pH sensor 113, "ORP" for the ORP sensor 114, "NO3" for the NO3 sensor 115, "FLOW" for the FLOW sensor 116, "TUR" for the TUR sensor 117, and "Temp" for the TEMP sensor 118.

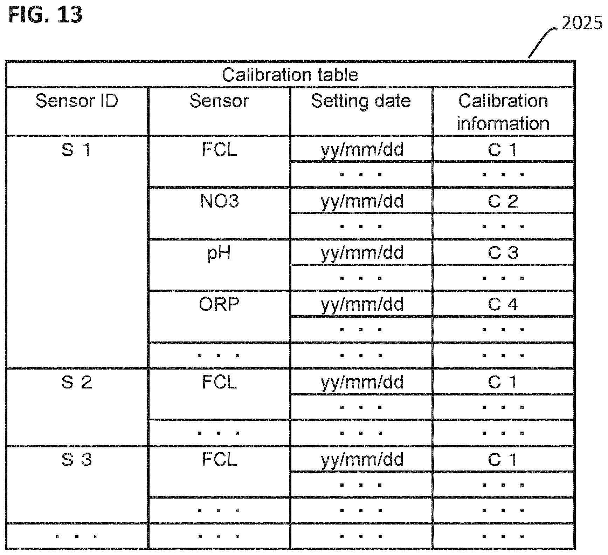

FIG. 13 is a diagram showing a data structure of the calibration table 2025. The calibration table 2025 shown in FIG. 13 is a table having columns of sensor, setting date, and calibration information, with a sensor ID as a key.

The sensor ID is an item for storing an identifier for uniquely identifying the sensor device 10. The sensor is an item indicating the name for identifying various sensors included in the sensor device 10. The setting date is an item for storing the date on which information on calibration is set. The calibration information is an item for storing information on calibration.

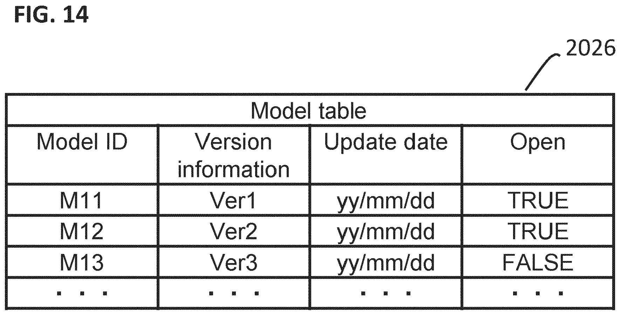

FIG. 14 is a diagram showing a data structure of the model table 2026. The model table 2026 shown in FIG. 14 is a table having columns of version information, update date, and open, with a model ID as a key.

The model ID is an item for storing an identifier for uniquely identifying a trained model. The version information is an item for storing the version of the trained model. The update date is an item for storing the date on which the trained model represented by the model ID was generated. Open is an item indicating whether the trained model is open or not. If the model is open, it is TRUE; if not, it is FALSE.

### <3 Operation>

Operations of the sensor device 10 and the server 20 provided in the system 1 will be described.

### <3.1 Operation of Sensor Device 10>

First, the user of the sensor device 10 prepares for operation. Specifically, the user confirms that there is no mistake in the wiring and piping of the sensor device 10. The user turns on a breaker switch provided in the control box 1112. The user confirms that the air release valve 1115 is closed. The user opens the valves 119 and 1110 and introduces sample water into the sensor device 10. As a result, the sample water is supplied from the valve 119, and the flow cell 1111 and the shell 1171 are filled with the sample water.

The user turns a flow rate adjustment knob provided on the flow rate adjustment valve 1117 while checking the flow rate measured by the FLOW sensor 116 on the touch panel 1119. The user adjusts the flow rate of the sample water by turning the flow rate adjustment knob.

The user inserts an air release tube into an insertion port 11151 provided at the top of the air release valve 1115. The user opens the air release valve 1115 to release air. Since the measurement ports 11111, 11112, and 11113 of the flow cell 1111 are formed so that the openings face upward and the air release channel 11115 is provided in the vicinity of the openings, the air in the measurement ports 11111, 11112, and 11113 can be released at once. When air is released, the user closes the air release valve 1115.

Information on calibration of the EC sensor 111, the FCL sensor 112, the pH sensor 113, the ORP sensor 114, the NO3 sensor 115, and the TUR sensor 117 installed in the sensor device 10 is stored in, for example, the storage unit 180. The sensor device 10 measures the sample water using the information stored in the storage unit 180.

The information on calibration of the EC sensor 111, the FCL sensor 112, the pH sensor 113, the ORP sensor 114, the NO3 sensor 115, and the TUR sensor 117 may be written in advance in the memory of each sensor. The control unit 190 receives, by the second transmission/reception unit 193, the information on calibration stored in each sensor. The control unit 190 stores the received information in the storage unit 180. Note that the information on calibration stored in each sensor may be received by the second transmission/reception unit 193 at the time of replacement of the sensor.

When the information on calibration is provided from the server 20, the storage unit 180 of the sensor device 10 and the memory of each sensor do not have to store information on calibration. The user inputs, to the sensor device 10, an instruction to inquire of the server 20 about information on calibration.

### (Acquisition of Information on Calibration)

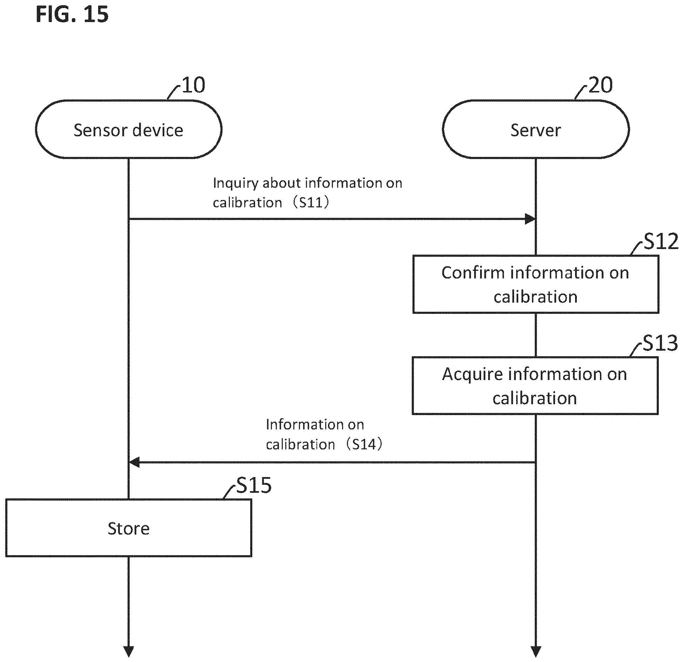

FIG. 15 is a diagram illustrating an example of an operation in which the sensor device 10 shown in FIG. 1 acquires information on calibration from the server 20.

The first transmission/reception unit 192 of the control unit 190 inquires of the server 20 about information on calibration (step S11). Specifically, the first transmission/reception unit 192 inquires of the server 20 whether there is information on calibration of the EC sensor 111, the FCL sensor 112, the pH sensor 113, the ORP sensor 114, the NO3 sensor 115, or the TUR sensor 117, for example.

The control unit 203 of the server 20 confirms by the calibration setting module 2036 whether there is information to be transmitted to the sensor device 10 for the inquired sensor device 10 (step S12). For example, the storage unit 202 of the server 20 stores information on calibration of the EC sensor 111, the FCL sensor 112, the pH sensor 113, the ORP sensor 114, the NO3 sensor 115, and the TUR sensor 117 of the sensor device 10. The calibration setting module 2036 determines that there is information to be transmitted to the sensor device 10, and reads information on calibration from the calibration table 2025 of the storage unit 202 (step S13). The server 20 transmits, by the transmission control module 2032, the read information to the sensor device 10 (step S14).

The first transmission/reception unit 192 of the control unit 190 receives the information transmitted from the server 20, and stores the received information on calibration in the calibration information 181 of the storage unit 180 (step S15).

Note that the provision of information on calibration is not limited to the provision in response to a request from the sensor device 10. The calibration setting module 2036 may transmit information on calibration of the sensor to the sensor device 10 when the calibration setting module 2036 determines that a given sensor of the sensor device 10 requires calibration.

Further, in response to an inquiry from the sensor device 10, there is a case where there is no set new information on calibration. In this case, the calibration setting module 2036 returns to the sensor device 10 that there is no information to be transmitted to the sensor device 10. In response to the response that there is no information to be transmitted, when there is a calibration request from the sensor device 10, the calibration setting module 2036 calculates information on calibration.

In the description of FIG. 15, the operation at the time of activation of the sensor device 10 has been described. The operation of acquiring information on calibration from the server 20 is not limited to being performed at the time of activation of the sensor device 10. The first transmission/reception unit 192 may acquire information on calibration at the time of replacement of the sensor.

### (Calibration Process at Sensor Device 10)

The calibration process may be performed at the sensor device 10.

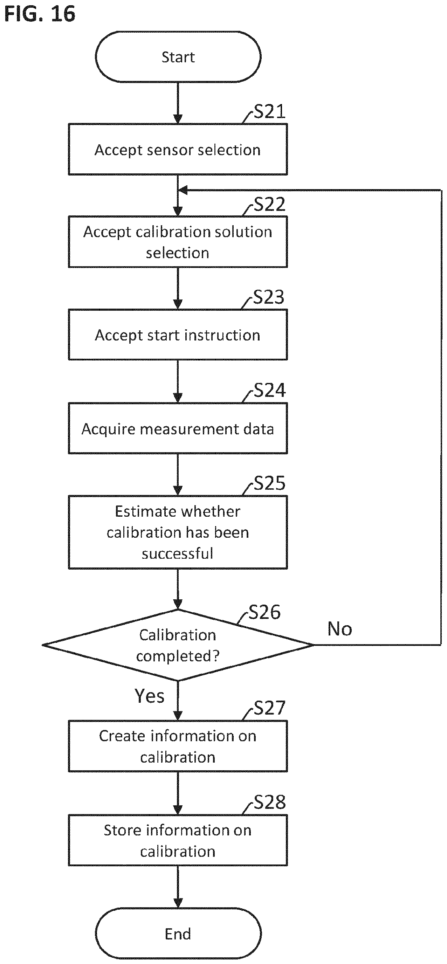

FIG. 16 is a flowchart showing an example of an operation in which the sensor device 10 shown in FIG. 2 and FIG. 3 performs the calibration process.

When performing the calibration process, the user first closes the valves 119 and 1110 to stop the inflow of the sample water. The user attaches a drain tube to the drain valve 1116. The user opens the drain valve 1116 and drains the sample water to the outside of the sensor device 10. Note that the calibration process of the sensor device 10 may be performed before the sample water is supplied to the sensor device 10.

The user removes the sensors 111 to 115 and 118 from the flow cell 1111, wipes off the water droplets, and inserts the sensors 111 to 115 and 118 back into the flow cell 1111. The user supplies the first calibration solution to the flow cells 1111-1 and 1111 2 from which the sample water has been drained. When the flow cells 1111-1 and 1111-2 are filled with the first calibration solution, the user opens the air release valve 1115 to release the air in the flow cells 1111-1 and 1111-2.

The sensor device 10 causes the touch panel 1119 to display a "calibration start" object for performing the calibration process. The user presses the "calibration start" object displayed on the touch panel 1119. When the "calibration start" object is pressed, the sensor device 10 accepts selection of a sensor to be calibrated (step S21). For example, the sensor device 10 causes the touch panel 1119 to display a sensor selection screen to accept selection of a sensor from the user.

The user selects sensors to be calibrated at once from among a plurality of sensors displayed on the selection screen. For example, the user selects the EC sensor 111, the FCL sensor 112, the pH sensor 113, the ORP sensor 114, and the NO3 sensor 115.

When a sensor is selected, the sensor device 10 accepts selection of a calibration solution (step S22). For example, the sensor device 10 displays a calibration solution selection screen on the touch panel 1119 to accept selection of a calibration solution from the user. The user selects the first calibration solution from among a plurality of calibration solutions displayed on the selection screen.

When the calibration solution is selected, the sensor device 10 accepts an instruction to start the calibration process (step S23). For example, the sensor device 10 displays a "start" object on the touch panel 1119 to accept a start instruction from the user. The user presses the "start" object to start the calibration process.

When the calibration process is started, the sensor device 10 receives, by the second transmission/reception unit 193, the first measurement data from the selected sensors (step S24). The sensor device 10 stores the received first measurement data in the calibration-time measurement information 184 of the storage unit 180.

The sensor device 10 estimates, by the calibration unit 194, whether or not the calibration process of the sensors 111 to 115 has been successful (step S25). Specifically, for example, the calibration unit 194 monitors the transition of the measurement value. The calibration unit 194 compares the transition of the acquired measurement value with the transition of the measurement value assumed at the time of successful calibration, which is stored for each sensor. For example, when the transition of the acquired measurement value falls within a predetermined range of the assumed transition, the calibration unit 194 determines that the calibration has been successful.

When the calibration is successful, the calibration unit 194 determines whether or not the measurement using the assumed calibration solution is complete (step S26). When the measurement using the assumed calibration solution is not complete (No in step S26), the calibration unit 194 shifts the process to step S22.

For example, the user drains the first calibration solution from the flow cells 1111-1 and 1111-2, and supplies the second calibration solution to the flow cells 1111-1 and 1111-2. The calibration unit 194 performs the calibration process of the sensors in the flow cells 1111-1 and 1111-2 filled with the second calibration solution. When the calibration process of the sensors using the second calibration solution is successful, the calibration unit 194 shifts the process to step S22.

The user drains the second calibration solution from the flow cells 1111-1 and 1111-2 and supplies the third calibration solution to the flow cells 1111-1 and 1111-2. The calibration unit 194 performs the calibration process of the sensors in the flow cells 1111-1 and 1111-3 filled with the second calibration solution. When the calibration process of the sensors using the third calibration solution is successful, the calibration unit 194 shifts the process to step S27.

When the measurement using the assumed calibration solutions is completed (Yes in step S26), the calibration unit 194 creates information on calibration for each sensor based on the information measured for each sensor (step S27). The calibration unit 194 stores the created information on calibration in the calibration information 181 of the storage unit 180.

The sensor device 10 transmits, by the first transmission/reception unit 192, the information on calibration stored in the calibration information 181 to the server 20 at a predetermined timing. The sensor device 10 transmits, by the first transmission/reception unit 192, the information stored in the calibration-time measurement information 184 to the server 20 at a predetermined timing. The predetermined timing is, for example, the following.
- Predetermined cycle
- Predetermined time
- When the calibration process is completed
- When information is stored

### (Measurement of Sample Water: Process at Sensor)

The sensor device 10 measures the water quality of sample water using the sensors 111 to 118. Specifically, for example, the water quality of the sample water is measured using the sensors 111 to 115 and 118 inserted into the measurement ports of the flow cell 1111 and the TUR sensor 117 inserted into the shell 1171.

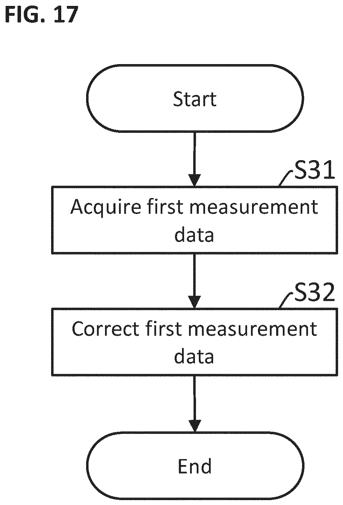

FIG. 17 is a flowchart showing an example of an operation of the sensor shown in FIG. 7.

The pH sensor 113 shown in FIG. 7 measures the potential of the sample water filled in the flow cell 1111-1 by the pH electrode 1131, for example, at a predetermined cycle (step S31). The pH sensor 113 stores the acquired potential in the memory 11322 as first measurement data.

The pH sensor 113 corrects the abnormality included in the first measurement data (step S32). Specifically, the pH sensor 113 reduces the noise included in the first measurement data using, for example, the trained model 113221. Specifically, for example, the pH sensor 113 inputs the first measurement value to the trained model 113221 to replace the measurement value with a sudden change with a value estimated from the previous measurement value. The measurement value with no sudden change is output as it is from the trained model 113221. The pH sensor 113 stores the data output from the trained model 113221 in the memory 11322 as second measurement data.

The pH sensor 113 transmits the first measurement data and the second measurement data to the sensor device 10 at a predetermined timing via the input/output IF 11325. The predetermined timing is, for example, the following.
- Predetermined cycle
- When information is acquired
- When information is stored

The sensors 111 to 115 and 118 and the TUR sensor 117 inserted into the shell 1171 operate in the same manner as the pH sensor 113.

### (Measurement of Sample Water: Process at Sensor Device 10)

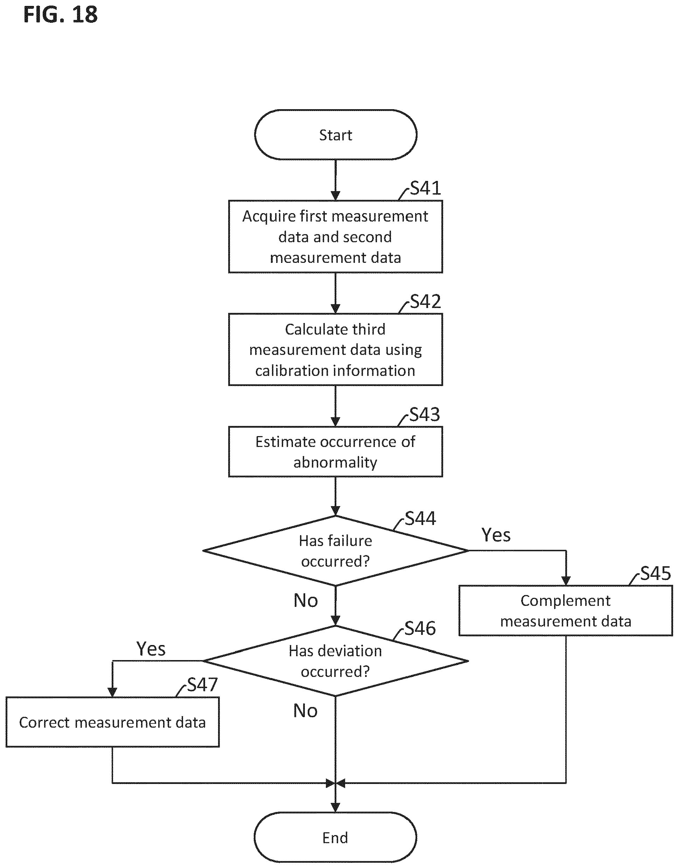

FIG. 18 is a flowchart showing an example of an operation of the sensor device 10 shown in FIG. 6.

The control unit 190 receives, by the second transmission/reception unit 193, the first measurement data and the second measurement data from the sensors 111 to 115, 117, and 118 (step S41). The control unit 190 stores the received first measurement data and second measurement data in the measurement information 182 of the storage unit 180.

The control unit 190 calculates, by the calculation unit 195, third measurement data from the second measurement data received from the sensors 111 to 115 and 117 and information on calibration corresponding to each sensor (step S42).

Specifically, the calculation unit 195 calculates an EC value as the third measurement data from, for example, the second measurement data received from the EC sensor 111 and the information on calibration for the EC sensor 111. Further, the calculation unit 195 calculates an FCL value as third measurement data, for example, from the second measurement data received from the FCL sensor 112 and information on calibration for the FCL sensor 112. Further, the calculation unit 195 calculates a pH value as third measurement data, for example, from the second measurement data received from the pH sensor 113 and information on calibration for the pH sensor 113. Further, the calculation unit 195 calculates an ORP value as third measurement data, for example, from the second measurement data received from the ORP sensor 114 and information on calibration for the ORP sensor 114. Further, the calculation unit 195 calculates a nitric acid concentration as third measurement data, for example, from the second measurement data received from the NO3 sensor 115 and information on calibration for the NO3 sensor 115. Further, the calculation unit 195 calculates a turbidity as third measurement data, for example, from the second measurement data received from the TUR sensor 117 and information on calibration for the TUR sensor 117.

The control unit 190 estimates, by the estimation unit 196, whether or not an abnormality has occurred in the sensors 111 to 118 (step S43). For example, the estimation unit 196 inputs the third measurement data calculated for each of the sensors 111 to 115 and 117, the first measurement data measured by the FLOW sensor 116, and the second measurement data measured by the TEMP sensor 118 to the trained model 185. When an abnormality has occurred in any of the sensors whose measurement data has been input, the trained model 185 outputs a sensor in which an abnormality is estimated to have occurred and an abnormality estimated to have occurred in the sensor.

Specifically, when there is a failed sensor among the sensors whose measurement data has been input, the trained model 185 outputs, for example, a sensor in which a failure is estimated to have occurred and the fact that a failure has occurred in the sensor. When there is a sensor in which a deviation from the time of calibration has occurred among the sensors whose measurement data has been input, the trained model 185 outputs, for example, a sensor in which a deviation from the time of calibration is estimated to have occurred and the fact that a deviation from the time of calibration has occurred in the sensor.

The estimation unit 196 may present the estimation result to the user from the presentation control unit 199.

The control unit 190 determines, by the complementing unit 198, whether or not a sensor in which a failure has occurred is included (step S44). When a sensor in which a failure has occurred is included (Yes in step S44), the complementing unit 198 complements the measurement data of the sensor in which a failure has occurred, using the measurement data of the plurality of sensors acquired in the past and the measurement data of the other sensors measured this time (step S45).

Specifically, for example, when it is estimated that a failure has occurred in the pH sensor 113, the complementing unit 198 discards the third measurement data calculated based on the measurement of the pH sensor 113. The complementing unit 198 calculates complementary measurement data of the pH sensor 113 using the third measurement data of the sensors 111 to 115 and 117, the first measurement data of the FLOW sensor 116, and the second measurement data of the TEMP sensor 118 acquired in the past, and the third measurement data of the sensors 111, 112, 114, 115, and 117, the first measurement data of the FLOW sensor 116, and the second measurement data of the TEMP sensor 118 measured this time. The complementing unit 198 stores the calculated complementary measurement data in the storage unit 180 as the third measurement data.

When a sensor in which a failure has occurred is not included (No in step S44), the complementing unit 198 shifts the process to step S46.

The control unit 190 determines, by the correction unit 197, whether or not a sensor in which a deviation from the time of calibration has occurred is included (step S46). When a sensor in which a deviation from the time of calibration has occurred is included (Yes in step S46), the correction unit 197 corrects the measurement data of the sensor in which a deviation from the time of calibration has occurred, using the measurement data of the plurality of sensors acquired in the past and the measurement data of the other sensors measured this time (step S47).

Specifically, for example, when it is estimated that a deviation from the time of calibration has occurred in the pH sensor 113, the correction unit 197 corrects the third measurement data calculated based on the measurement of the pH sensor 113. At this time, the correction unit 197 corrects the third measurement data calculated based on the measurement of the pH sensor 113, using the third measurement data of the sensors 111 to 115 and 117, the first measurement data of the FLOW sensor 116, and the second measurement data of the TEMP sensor 118 acquired in the past, and the third measurement data of the sensors 111, 112, 114, 115, and 117, the first measurement data of the FLOW sensor 116, and the second measurement data of the TEMP sensor 118 measured this time. The correction unit 197 stores the corrected third measurement data in the storage unit 180.

When there is no sensor in which a deviation from the time of calibration has occurred (No in step S46), the control unit 190 terminates the process.

Note that, in the flowchart shown in FIG. 18, the complementing unit 198 determines in step S44 whether or not a sensor in which a failure has occurred is included. In this determination, the complementing unit 198 may determine whether or not there is only one sensor in which a failure has occurred. When there is only one sensor in which a failure has occurred, the complementing unit 198 complements the measurement data of the sensor in which a failure has occurred, using the measurement data of the plurality of sensors acquired in the past and the measurement data of the other sensors measured this time. When a failure has occurred in two or more sensors, the complementing unit 198 stops the measurement by the sensor device 10.

In the flowchart shown in FIG. 18, the correction unit 197 determines in step S46 whether or not a sensor in which a deviation from the time of calibration time has occurred is included. In this determination, the correction unit 197 may determine whether or not there is only one sensor in which a deviation from the time of calibration has occurred. When there is only one sensor in which a deviation from the time of calibration has occurred, the correction unit 197 corrects the measurement data of the sensor in which a deviation from the time of calibration has occurred, using the measurement data of the plurality of sensors acquired in the past and the measurement data of the other sensors measured this time. When a deviation from the time of calibration has occurred in two or more sensors, the correction unit 197 stops the measurement by the sensor device 10.

In addition, in the flowchart shown in FIG. 18, the complementing unit 198 complements in step S45 the measurement data of the sensor in which a failure has occurred, using the measurement data of the plurality of sensors acquired in the past and the measurement data of the other sensors measured this time. In step S45, the complementing unit 198 may complement the measurement data of the sensor in which a failure has occurred, using the measurement data acquired in the past by a plurality of sensor devices 10 installed in a facility having the same water source and the measurement data measured this time.

In addition, in the flowchart shown in FIG. 18, the correction unit 197 corrects in step S47 the measurement data of the sensor in which a deviation from the time of calibration has occurred, using the measurement data of the plurality of sensors acquired in the past and the measurement data of the other sensors measured this time. In step S47, the correction unit 197 may correct the measurement data of the sensor in which a deviation from the time of calibration has occurred, using the measurement data acquired in the past by a plurality of sensor devices 10 installed in a facility having the same water source and the measurement data measured this time.

The first transmission/reception unit 192 transmits the first measurement data, the second measurement data, and the third measurement data to the server 20 at a predetermined timing via the communication unit 120. In addition, the first transmission/reception unit 192 transmits the first measurement data, the second measurement data, and the third measurement data to other sensor devices 10 installed in the same water treatment facility at a predetermined timing via the communication unit 120. The predetermined timing is, for example, the following.
- Predetermined cycle
- When information is acquired
- When information is stored

### <3.2 Operation of Server 20>

The server 20 accumulates data measured in the sensor device 10 and the like, and provides services that utilize the accumulated data.

### (Data Utilization at Server 20: Analysis Process 1)

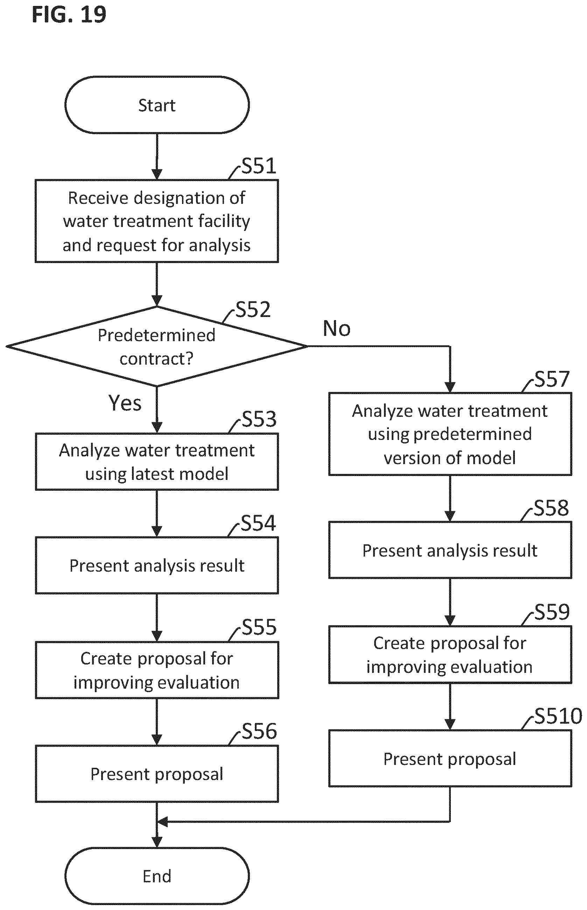

FIG. 19 is a flowchart showing an example of an operation of the server 20 shown in FIG. 8.

The control unit 203 receives, from a given user, a designation of a water treatment facility associated with the user and an instruction for analysis of the designated water treatment facility (step S51). At this time, the user may select the type of analysis. Further, the control unit 203 may acquire information on the water treatment facility together with the designation of the water treatment facility from a given user.

The control unit 203 reads, by the analysis module 2034, information on the designated water treatment facility from the storage unit 202. Based on the read information, the analysis module 2034 determines whether or not the designated water treatment facility has a predetermined contract (step S52). The predetermined contract represents, for example, a paid contract or a contract corresponding to a paid contract. According to the example of the present embodiment, the predetermined contract represents, for example, a paid contract or a premium contract.

When the water treatment facility has the predetermined contract, the analysis module 2034 analyzes the water treatment at the water treatment facility using, for example, the latest version of the first trained model 2027 (step S53). Specifically, the analysis module 2034 inputs information on the designated water treatment facility to the first trained model 2027 and causes the first trained model 2027 to output an evaluation of the water treatment.

For example, the analysis module 2034 extracts a water treatment facility similar to the designated water treatment facility based on the information read for the water treatment facility. For example, the analysis module 2034 extracts, as a similar water treatment facility, a water treatment facility with a similar raw water quality and the same water treatment facility type, which includes a similar treatment device, performs a similar treatment, and uses a similar chemical to the designated water treatment facility. The analysis module 2034 calculates the degree of similarity to the designated water treatment facility based on, for example, the raw water quality, the water treatment facility type, the treatment device included, the treatment to be performed, the chemical used, and the like.

The analysis module 2034 may also consider the environment of the water treatment facility to extract a similar water treatment facility. For example, the analysis module 2034 refers to the transitions in weather, temperature, humidity, wind speed, pressure, dust, etc. to extract a water treatment facility located in a similar environment. For example, the analysis module 2034 calculates the degree of similarity to the designated water treatment facility also based on the transition of the environment around the water treatment facility.

The analysis module 2034 compares the designated water treatment facility with the extracted water treatment facility.

The control unit 203 presents, by the presentation module 2039, the analysis result created in step S53 to the user (step S54). Specifically, the presentation module 2039 causes the terminal device 30 operated by the user to display the evaluation acquired by the analysis module 2034 and the comparison result with the similar water treatment facility.

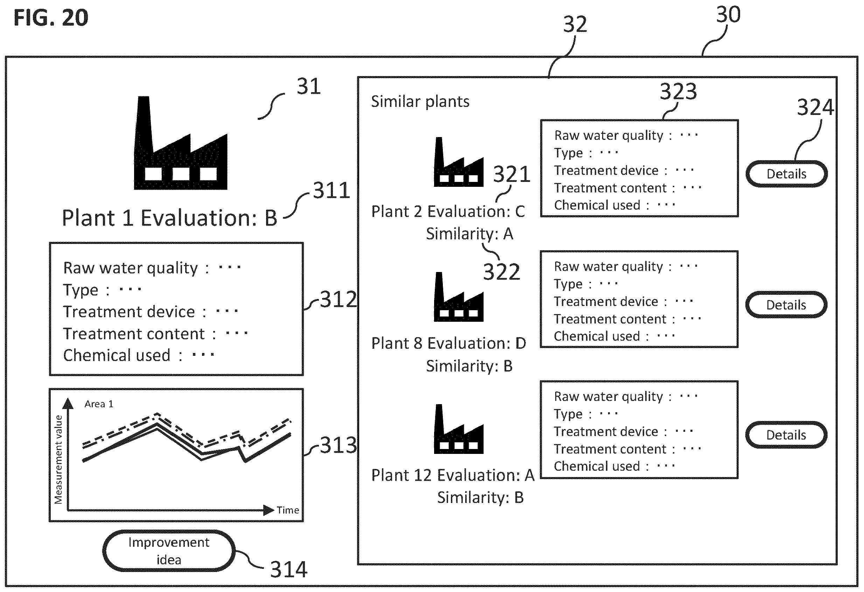

FIG. 20 is a schematic diagram showing a display example of the terminal device 30 used by the user.

The display example shown in FIG. 20 includes a first display area 31 for displaying information on the designated water treatment facility and a second display area 32 for displaying information on the similar water treatment facility. The first display area 31 includes an evaluation 311 on the water treatment of the water treatment facility, display objects 312 and 313, and an instruction object 314. Detailed information of the water treatment facility is displayed in the display object 312. The display object 313 displays information representing the transition of measurement data. The information representing the transition of measurement data may be displayed in any manner. In the present embodiment, for example, it is displayed as a graph. The instruction object 314 is an object for requesting an improvement plan for the designated water treatment facility.

The second display area 32 includes an evaluation 321 on the water treatment of the water treatment facility, a similarity 322 to the designated water treatment facility, a display object 323, and an instruction object 324. Detailed information on the water treatment facility is displayed in the display object 323. The instruction object 324 is an object for displaying more detailed information about the water treatment facility.

The presentation module 2039 displays water treatment facilities in an arbitrary order in the second display area 32. For example, the presentation module 2039 displays the water treatment facilities in the order of plant ID, highest evaluation, highest similarity, etc.

When details of a similar water treatment facility are requested by the user, the presentation module 2039 displays the transition of the measurement data for the water treatment facility.

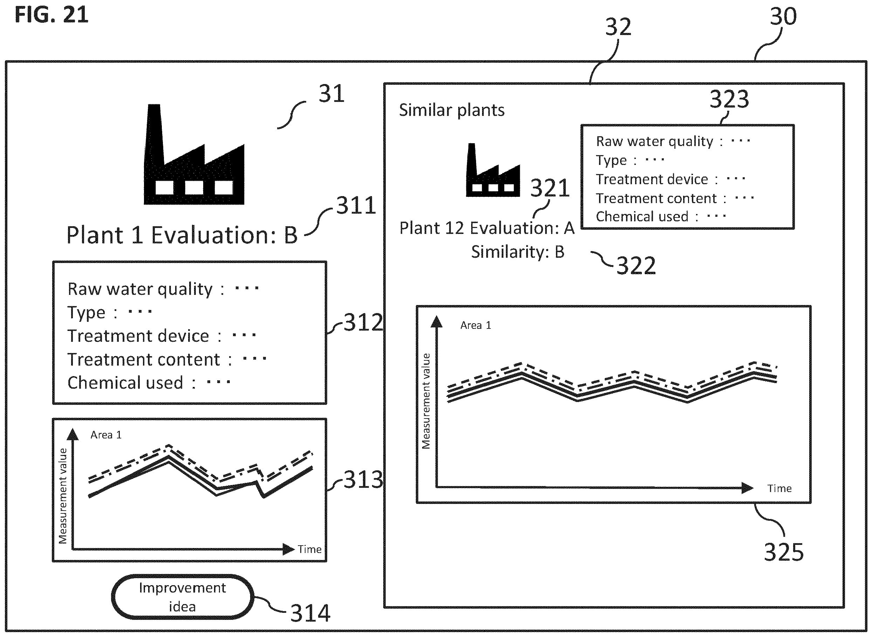

FIG. 21 is a schematic diagram showing a display example of the terminal device 30 used by the user. In the display example shown in FIG. 21, a display object 325, in which the transition of measurement data is displayed, is displayed in the second display area 32.

When an improvement plan is requested by the user, the control unit 203 creates, by the proposal module 2037, a proposal for improving the evaluation of the water treatment (step S55). Specifically, for example, the proposal module 2037 inputs the information on the water treatment facility to a trained model and causes the trained model to output an improvement plan for improving the evaluation of the water treatment.

The control unit 203 presents, by the presentation module 2039, a proposal for improving the evaluation of the water treatment to the user (step S56). Specifically, for example, the proposal module 2039 causes the terminal device 30 operated by the user to display the proposal for improving the evaluation of the water treatment.

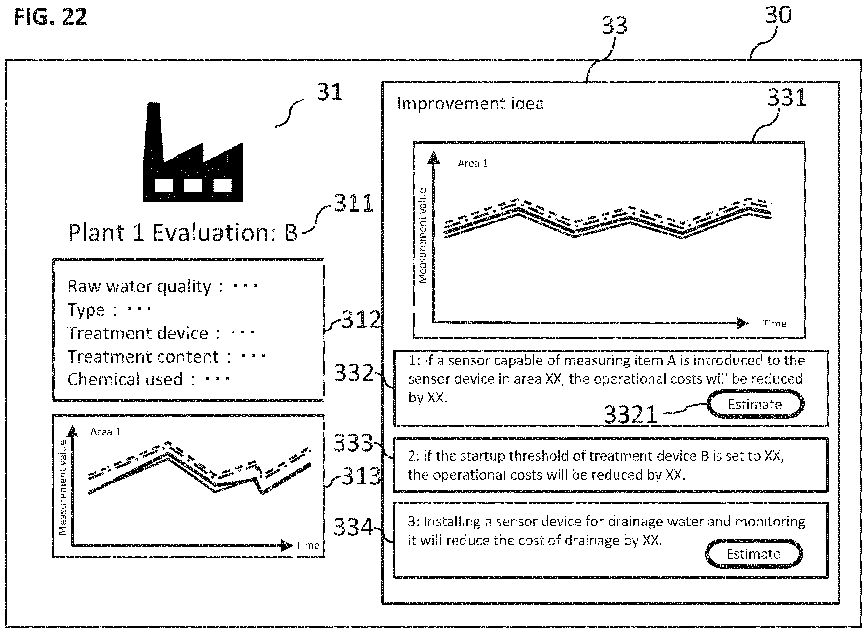

FIG. 22 is a schematic diagram showing a display example of the terminal device 30 used by the user.

The display example shown in FIG. 22 includes the first display area 31 and a third display area 33 for displaying an improvement plan for the water treatment facility. The third display area 33 includes display objects 331 to 334 and an instruction object 3321. The display object 331 displays the transition of measurement data as an improvement target. Proposals for improvement is displayed in the display objects 332 to 334. The instruction object 3321 is an object for requesting an estimate of the cost required to adopt the proposal.

As the proposals for improvement, the presentation module 2039 displays, in the display objects 332 to 334, a proposal of a new item to be sensed, a proposal of a new position to be sensed, a proposal of a new position to which the sensor device 10 should be newly installed, a proposal of operation control, and the like. The presentation module 2039 also displays the operational costs to be improved with each proposal. Specifically, for example, the presentation module 2039 proposes, in the display object 334, drainage monitoring and displays the reduction in drainage costs due to drainage monitoring.

When the user requests an estimate, the proposal module 2037 creates an estimate according to the proposal. The presentation module 2039 presents the created estimate to the user.

In step S52, when the water treatment facility does not have the predetermined contract, the analysis module 2034 analyzes the water treatment at the water treatment facility using, for example, the open version of the first trained model 2027 (step S57). Specifically, the analysis module 2034 inputs information on the designated water treatment facility to the open version of the first trained model 2027 and causes the first trained model 2027 to output an evaluation of the water treatment. In addition, the analysis module 2034 extracts a water treatment facility similar to the designated water treatment facility based on the information read for the water treatment facility, for example.

The control unit 203 presents, by the presentation module 2039, the analysis result created in step S57 to the user (step S58). Specifically, the presentation module 2039 causes the terminal device 30 operated by the user to display the evaluation acquired by the analysis module 2034 and the comparison result with the similar water treatment facility.

When an improvement plan is requested by the user, the control unit 203 creates, by the proposal module 2037, a proposal for improving the evaluation of the water treatment (step S59). Specifically, for example, the proposal module 2037 inputs information on the water treatment facility to a trained model and causes the trained model to output an improvement plan for improving the evaluation of the water treatment. The version of the trained model at this time may be older than that of the trained model used in step S55.

The control unit 203 presents, by the presentation module 2039, a proposal for improving the evaluation of the water treatment to the user (step S510). Specifically, for example, the proposal module 2039 causes the terminal device 30 operated by the user to display the proposal for improving the evaluation of the water treatment.

In the examples shown in FIG. 20 to FIG. 22, the measurement data acquired by the sensor device 10 installed in a given area is displayed, but the sensor device 10 that acquires the measurement data may be arbitrarily selected. Alternatively, measurement data acquired by the sensor devices 10 installed in a plurality of areas may be displayed.

### (Data Utilization at Server 20: Analysis Process 2)

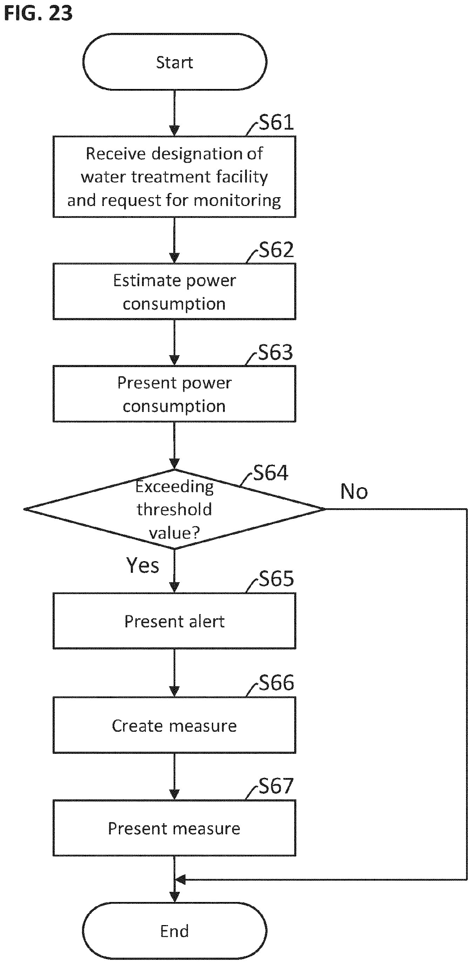

FIG. 23 is a flowchart showing an example of the operation of the server 20 shown in FIG. 8.

The control unit 203 receives, from a given user, a designation of a water treatment facility associated with the user and an instruction for monitoring of the designated water treatment facility (step S61).

The control unit 203 estimates, by the analysis module 2034, the power consumption in the water treatment facility (step S62). Specifically, for example, the analysis module 2034 inputs the operating status of the treatment device provided in the designated water treatment facility, various types of sensing information, and the like to a function for calculating the power consumption so as to calculate the power consumption. The analysis module 2034 may estimate the power consumption of the entire water treatment facility or the power consumption of each treatment device provided in the water treatment facility.

The control unit 203 presents, by the presentation module 2039, the power consumption calculated in step S62 to the user (step S63).

The presentation module 2039 determines whether or not the calculated power consumption exceeds a predetermined threshold value (step S64). When the calculated power consumption exceeds the predetermined threshold value (Yes in step S64), the presentation module 2039 causes the terminal device 30 to present an alert indicating that the power consumption exceeds the threshold value (step S65). When the calculated power consumption exceeds the predetermined threshold value, the analysis module 2034 estimates an influence expected when this power consumption is maintained. The presentation module 2039 presents the estimated influence to the user.

The control unit 203 creates, by the proposal module 2037, a measure for reducing the power consumption estimated by the analysis module 2034 (step S66).

The control unit 203 presents, by the presentation module 2039, a measure for reducing the estimated power consumption to the user (step S67). Specifically, for example, the presentation module 2039 causes the terminal device 30 operated by the user to display a measure for reducing the estimated power consumption.

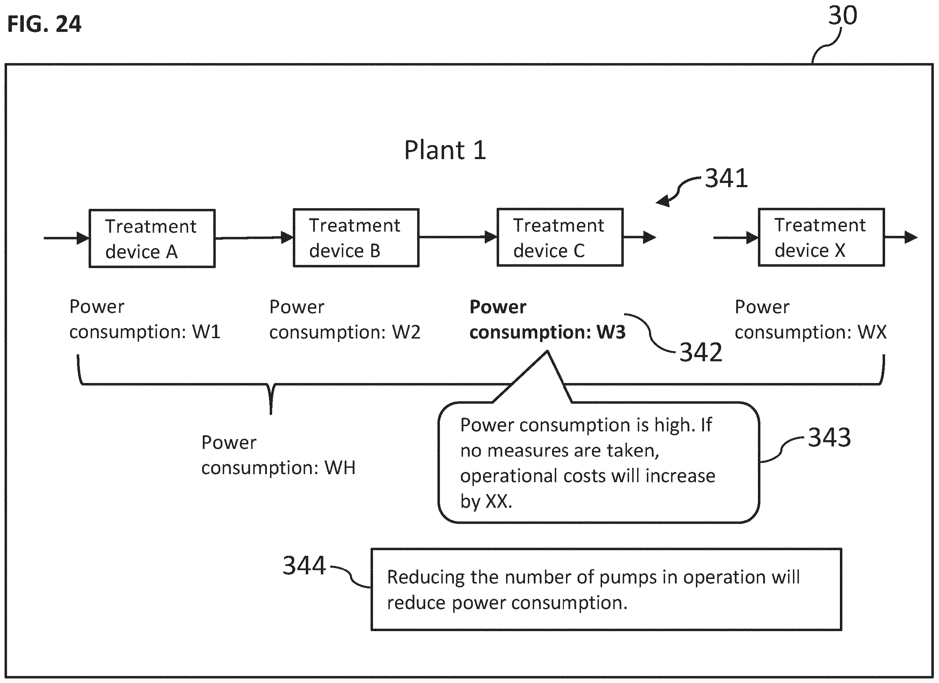

FIG. 24 is a schematic diagram showing a display example of the terminal device 30 used by the user.

The display example shown in FIG. 24 includes display objects 341 to 344. The treatment devices constituting the water treatment facility are displayed in the display object 341. The power consumption of each of the treatment devices constituting the water treatment facility is displayed in the display object 342. An effect that can be distinguished from others is applied to the display object 342 whose power consumption exceeds a threshold. In the example shown in FIG. 24, the "power consumption: W3" is bold. An alert indicating that the power consumption exceeds the threshold value is displayed in the display object 343. An influence that is caused when no measure is taken in response to the alert is also displayed in the display object 343. A measure for reducing the power consumption is displayed in the display object 344.

### (Data Utilization at Server 20: Simulation)

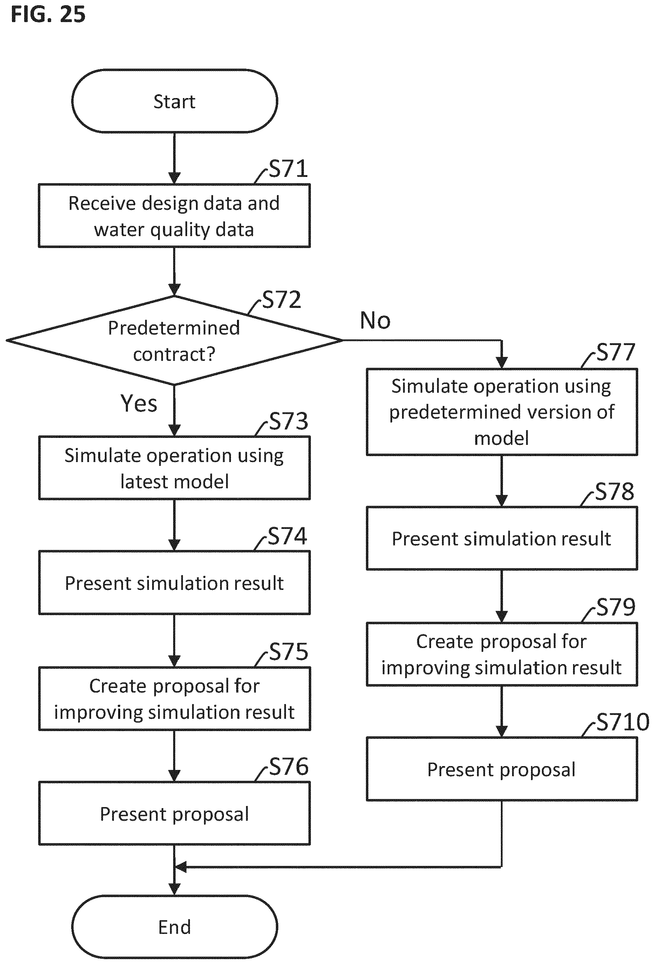

FIG. 25 is a flowchart showing an example of an operation of the server 20 shown in FIG. 8.

As the designation of the water treatment facility, the control unit 203 receives, from a given user, an input of design data of the water treatment facility assumed by the user and water quality data of water to be treated in the water treatment facility, and an instruction for simulation (step S71).

The control unit 203 determines, by the simulation module 2035, whether or not the user who has requested the simulation has the predetermined contract (step S72). When the user has the predetermined contract, the simulation module 2035 estimates the water treatment in the assumed water treatment facility using, for example, the latest version of the second trained model 2028 (step S73). Specifically, for example, the simulation module 2035 inputs design data of the assumed water treatment facility and water quality data of water to be treated in the water treatment facility to the second trained model 2028, and causes the second trained model 2028 to output information for estimating the water treatment. The information for estimating the water treatment includes, for example, the following.
- Measurement data at a predetermined position in the water treatment facility
- Operating status of treatment device
- Amount of water used
- Amount of pollutants discharged
- Amount of water reused
- Operational costs

The control unit 203 presents, by the presentation module 2039, the estimation result created in step S73 to the user (step S74). Specifically, the presentation module 2039 causes the terminal device 30 operated by the user to display the estimation result acquired by the simulation module 2035.

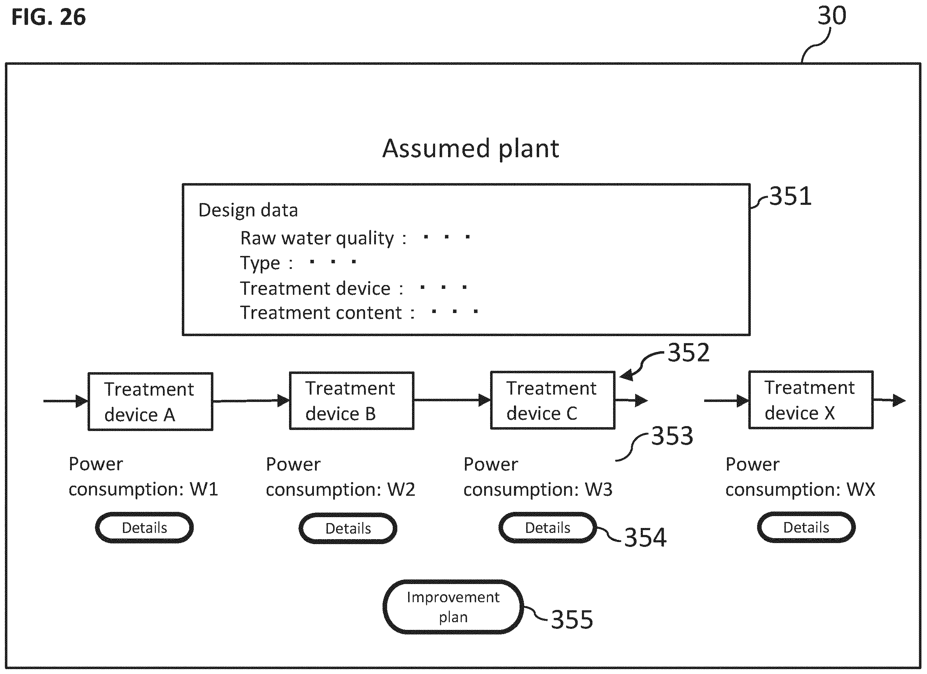

FIG. 26 is a schematic diagram showing a display example of the terminal device 30 used by the user.

The display example shown in FIG. 26 includes display objects 351 to 353 and instruction objects 354 and 355. The design data of the assumed plant is displayed in the display object 351. The treatment devices constituting the water treatment facility are displayed in the display object 352. The power consumption of each of the treatment devices constituting the water treatment facility is displayed in the display object 353. The instruction object 354 is an object for requesting measurement data acquired by the sensor device 10 installed in the assumed water treatment facility. The instruction object 355 is an object for requesting an improvement plan for the assumed water treatment facility.

When an improvement plan is requested from the user, the control unit 203 creates, by the proposal module 2037, a proposal for improving the estimation result of the water treatment (step S75). Specifically, for example, the proposal module 2037 creates a proposal of a new item to be sensed, a proposal of a new position to be sensed, a proposal of a new position where the sensor device 10 is to be newly installed, a proposal of operation control, and the like.

The control unit 203 presents, by the presentation module 2039, a proposal for improving the estimation result of the water treatment to the user (step S76). Specifically, the presentation module 2039 causes the terminal device 30 operated by the user to display a proposal for improving the estimation result of the water treatment. The presentation module 2039 also displays the operational costs to be improved with each proposal.

In step S72, when the user does not have the predetermined contract, the simulation module 2035 estimates the water treatment in the assumed water treatment facility using, for example, the open version of the second trained model 2028 (step S77). Specifically, for example, the simulation module 2035 inputs design data of the assumed water treatment facility and water quality data of water to be treated in the water treatment facility to the open version of the second trained model 2028, and causes the second trained model 2028 to output information for estimating the water treatment.

The control unit 203 presents, by the presentation module 2039, the estimation result created in step S77 to the user (step S78). Specifically, the presentation module 2039 causes the terminal device 30 operated by the user to display the estimation result acquired by the simulation module 2035.

When an improvement plan is requested from the user, the control unit 203 creates, by the proposal module 2037, a proposal for improving the estimation result of the water treatment (step S79).

The control unit 203 presents, by the presentation module 2039, a proposal for improving the estimation result of the water treatment to the user (step S710). Specifically, the presentation module 2039 causes the terminal device 30 operated by the user to display a proposal for improving the estimation result of the water treatment. The presentation module 2039 also displays the operational costs to be improved with each proposal.

### (Data Utilization at Server 20: Calibration Process)

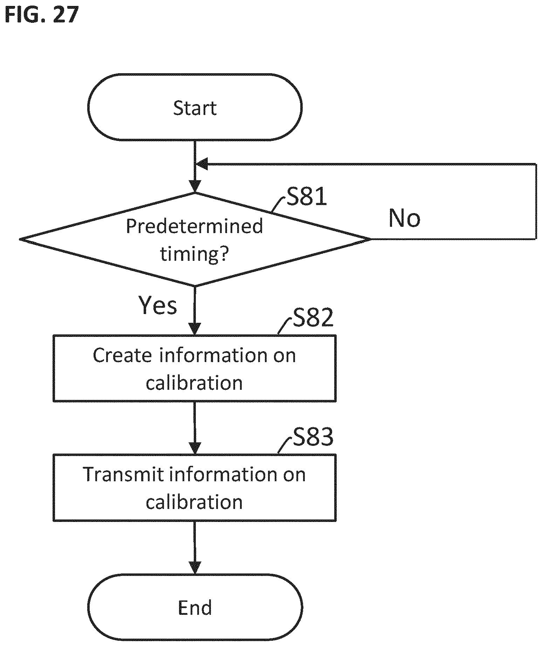

FIG. 27 is a flowchart showing an example of an operation of the server 20 shown in FIG. 8.

The control unit 203 determines, by the calibration setting module 2036, whether or not there is a sensor device 10 including a sensor that requires calibration (step S81). Specifically, the calibration setting module 2036 determines whether or not a sensor requires calibration based on, for example, information obtained by measurement in the sensor device 10. Namely, when there is a sensor whose measurement value changes over time with a different tendency from other sensors, the calibration setting module 2036 determines that the sensor requires calibration. The calibration setting module 2036 may determine that a sensor requires calibration when there is a sensor for which a predetermined period has elapsed since the sensor was previously calibrated. The calibration setting module 2036 may determine that a sensor provided in a sensor device 10 requires calibration when there is a request for calibration from the sensor device 10.

When there is a sensor device 10 including a sensor that requires calibration (Yes in step S81), the calibration setting module 2036 calculates information on calibration for the sensor (step S82). Specifically, for example, the calibration setting module 2036 calculates information on calibration from the first measurement data, second measurement data, and third measurement data acquired in the sensor device 10, which are stored in the measurement table 2024, and the information on calibration set in the past, which is stored in the calibration table 2025. For example, the calibration setting module 2036 inputs the latest first measurement data, second measurement data, and third measurement data to a trained model trained using the measurement information measured in the past in the sensor device 10 as input data, information on calibration set in the past as output data, thereby acquiring information on calibration.

The control unit 203 transmits, by the transmission control module 2032, the calculated information on calibration to the sensor device 10 including a sensor that has been determined to require calibration (step S83).

As described above, in the above-described embodiment, the control unit 190 acquires, by the second transmission/reception unit 193, measurement data from the plurality of sensors 111 to 118 which measure different items. The control unit 190 estimates, by the estimation unit 196, whether or not there is an abnormality in any of the plurality of sensors, based on the acquired measurement data of a plurality of items and the measurement data of the plurality of items acquired in the past. The control unit 190 corrects, by the correction unit 197 or the complementing unit 198, the measurement data measured by the sensor estimated to have an abnormality, based on the acquired measurement data of the plurality of items and the measurement data of the plurality of items acquired in the past. This makes it possible to estimate, in real time, a sensor in which an abnormality has occurred among the sensors 111 to 118. It also makes it possible to correct, in real time, the measurement data of the sensor in which the abnormality has occurred. Therefore, when an abnormality occurs in a sensor included in the sensor device 10, it is possible to suppress the influence of the abnormality on the measurement data. Further, even when an abnormality occurs in the sensor, there is no need to immediately stop the measurement.

Therefore, in the sensor device 10 according to the present embodiment, which has a plurality of sensors that measure different items, the measurement items can be accurately measured.

In the above embodiment, the estimation unit 196 estimates whether or not any of the plurality of sensors has failed based on the acquired measurement data of the plurality of items and the measurement data of the plurality of items acquired in the past. The complementing unit 198 complements the measurement data measured by the sensor estimated to have failed, based on the acquired measurement data of the plurality of items and the measurement data of the plurality of items acquired in the past. This makes it possible to estimate, in real time, a sensor in which a failure has occurred among the sensors 111 to 118. It also makes it possible to complement, in real time, the measurement data of the sensor in which the failure has occurred. Therefore, when a sensor included in the sensor device 10 fails, it is possible to suppress the influence of the failure on the measurement data. Also, even when a sensor fails, there is no need to immediately stop the measurement.

In the above-described embodiment, the estimation unit 196 estimates whether or not any of the plurality of sensors has deviated from the time of calibration, based on the acquired measurement data of the plurality of items and the measurement data of the plurality of items acquired in the past. The correction unit 197 corrects the measurement data measured by the sensor estimated to have deviated from the time of calibration, based on the acquired measurement data of the plurality of items and the measurement data of the plurality of items acquired in the past. This makes it possible to estimate, in real time, a sensor in which the deviation from the time of calibration has occurred among the sensors 111 to 118. It also makes it possible to correct, in real time, the measurement data of the sensor in which the deviation from the time of calibration has occurred. Therefore, when a deviation from the time of calibration occurs in a sensor included in the sensor device 10, it is possible to suppress its influence on the measurement data.

Further, in the above-described embodiment, the control unit 190 acquires, by the first transmission/reception unit 192, measurement data of a plurality of items measured in another sensor device 10 that measures the water of the same water source. The estimation unit 196 estimates whether or not there is an abnormality in any of the plurality of sensors, based on the acquired measurement data of the plurality of items, the measurement data of the plurality of items acquired from another sensor device 10, the measurement data of the plurality of items acquired in the past, and the measurement data of the plurality of items acquired in the past from another sensor device 10. As a result, since the sensors of the sensor devices 10 that measure the water of the same water source, which are expected to exhibit the same behavior, are compared, it is possible to find an abnormality occurring in a sensor with high accuracy.

In addition, in the above-described embodiment, the correction unit 197 or the complementing unit 198 corrects the measurement data measured by the sensor estimated to have an abnormality, based on the acquired measurement data of the plurality of items, the measurement data of the plurality of items acquired from another sensor device 10, the measurement data of the plurality of items acquired in the past, and the measurement data of the plurality of items acquired in the past from another sensor device 10. As a result, since the sensors of the sensor devices 10 that measure the water of the same water source, which are expected to exhibit the same behavior, are compared, the influence of an abnormality occurring in a sensor can be corrected with high accuracy.

In addition, in the above-described embodiment, the estimation unit 196 inputs the acquired measurement data of the plurality of items to a trained model trained using the measurement data of the plurality of items acquired in the past as input data and the determination of the occurrence of an abnormality based on the measurement data as ground truth output data, thereby estimating whether or not an abnormality has occurred. This makes it possible to further improve the accuracy of estimating the occurrence of an abnormality.

### <4 Modification>

In the example according to the above embodiment, the case where the sensor device 10 includes the touch panel 1119 has been described. However, the sensor device 10 does not have to include the touch panel 1119. The control unit 190 may transmit, by the first transmission/reception unit 192, information on processes performed by the control unit 190 to the terminal device 30 operated by the user. The terminal device 30 causes the display of the terminal device 30 to display the information transmitted from the sensor device 10. In addition, the sensor device 10 may receive, by the first transmission/reception unit 192, an operation from the user through the terminal device 30.

The terminal device 30 installs, for example, an application for cooperating with the sensor device 10. As a result, in the terminal device 30, a function of causing a display to display information on processes at the control unit 190 and a function of receiving an operation to the sensor device 10 from the user are realized.

In the trained models described in the above embodiment, the version used may be different depending on the contract, regardless of the presence or absence of the description. In addition, a plurality of types of the first trained model 2027 may be created according to the criteria for analysis. The type of first trained model 2027 used may differ depending on the contract.

In the example according to the above embodiment, the case where the sensor device 10 includes sensors capable of measuring different items has been described. However, some of the sensors of the sensor device 10 may be capable of measuring the same item. For example, the sensor device 10 determines that an abnormality has occurred in one of the sensors when the value of one of the sensors changes and is no longer the same as the value of the other sensor. This makes it possible to more accurately determine whether or not an abnormality has occurred in a sensor.

In the above embodiment, when the estimation unit 196 estimates that the sensors that have detected the measured information include a sensor that has deviated from the time of calibration, the sensor device 10 may request the server 20 for information on calibration of the sensor. In this case, the deviation from the time of calibration may be different between the case where the measurement value is corrected and the case where information on calibration is requested. For example, the deviation is set to be larger in the case where information on calibration is requested than in the case where the measured value is corrected. As described above, the estimation unit 196 estimates a sensor that requires calibration among a plurality of sensors, based on the measurement data of the plurality of items acquired from the plurality of sensors and the measurement data of the plurality of items acquired in the past. The first transmission/reception unit 192 then requests the server 20 for information on calibration of the sensor estimated to require calibration. As a result, the necessity of calibration is automatically determined in the sensor device 10, and information on calibration is requested to the server.

### <5 Basic Hardware Configuration of Computer>

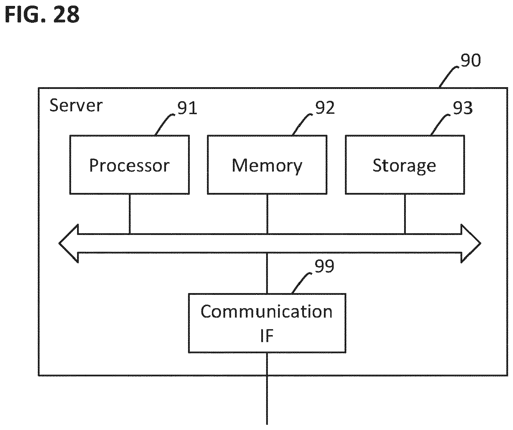

FIG. 28 is a block diagram showing a basic hardware configuration of the computer 90. The computer 90 includes at least a processor 91, a main storage device 92, an auxiliary storage device 93, and a communication interface (IF) 99. These are electrically connected to each other by a bus.

The processor 91 is hardware for executing an instruction set described in a program. The processor 91 is composed of an arithmetic unit, a register, a peripheral circuit, and the like.

The main storage device 92 is used to temporarily store a program, data to be processed by the program, etc., and the like. For example, it is a volatile memory such as a dynamic random access memory (DRAM).

The auxiliary storage device 93 is a storage device for storing data and programs. For example, it is a flash memory, a hard disk drive (HDD), a magneto-optical disk, a CD-ROM, a DVD-ROM, a semiconductor memory, or the like.

The communication IF 99 is an interface for inputting and outputting signals to communicate with other computers through a network using a wired or wireless communication standard.

The network is composed of various mobile communication systems, etc. constructed by the Internet, a LAN, a wireless base station, etc. For example, the network includes a 3G, 4G, or 5G mobile communication system, long term evolution (LTE), a wireless network (such as Wi-Fi (registered trademark)) connectable to the Internet by a given access point, and the like. In the case of wireless connection, examples of the communication protocol include Z-Wave (registered trade name), ZigBee (registered trade name), and Bluetooth (registered trade name). In the case of wired connection, the network includes ones with direct connection by an universal serial bus (USB) cable or the like.

It should be noted that the computer 90 can be virtually realized by distributing all or part of each hardware configuration to a plurality of computers 90 and interconnecting them via a network. As described above, the computer 90 is a concept that includes not only the computer 90 housed in a single housing or case but also a virtualized computer system.

### <Basic Functional Configuration of Computer 90>

A functional configuration of the computer realized by the basic hardware configuration of the computer 90 shown in FIG. 28 will be described. The computer includes at least functional units of a control unit, a storage unit, and a communication unit.

The functional units of the computer 90 may be realized by distributing all or part of each functional unit to a plurality of computers 90 connected to each other through a network. The computer 90 is a concept that includes not only a single computer 90 but also a virtualized computer system.

The control unit is realized by the processor 91 reading out various programs stored in the auxiliary storage device 93, loading them into the main storage device 92, and executing processes in accordance with the programs. The control unit can realize functional units that perform various types of information processing depending on the type of program. Thus, the computer is realized as an information processing apparatus that performs information processing.

The storage unit is realized by the main storage device 92 and the auxiliary storage device 93. The memory unit stores data, various programs, and various databases. In addition, the processor 91 can reserve a storage area corresponding to the storage unit in the main storage device 92 or the auxiliary storage device 93 in accordance with a program. In addition, the control unit can cause the processor 91 to execute processing for adding, updating, and deleting data stored in the storage unit in accordance with various programs.

The database refers to a relational database for managing a set of data, called a tabular table, structurally defined by rows and columns, in relation to each other. In the database, a table is called a table, a table column is called a column, and a table row is called a record. In the relational database, relationships between tables can be set so that the tables are associated with each other.

Normally, a column as a key for uniquely identifying a record is set in each table, but it is not necessary to set a key for a column. The control unit can cause the processor 91 to execute addition, deletion, and update of a record in a specific table stored in the storage unit in accordance with various programs.

The communication unit is realized by the communication IF 99. The communication unit realizes the function of communicating with another computer 90 through a network. The communication unit can receive information transmitted from another computer 90 and input the information to the control unit. The control unit can cause the processor 91 to execute information processing on the received information in accordance with various programs. Further, the communication unit can transmit information output from the control unit to another computer 90.

Although some embodiments of the present disclosure have been described above, these embodiments can be implemented in various other forms, and various omissions, replacements, and changes can be made without departing from the spirit of the invention. These embodiments and their modifications are included in the scope and spirit of the invention and are included in the scope of the claimed inventions and their equivalents.

### <Appendixes>

The matters described in the above embodiments will be appended below.

### (Appendix 1)

A program executed by a computer comprising a processor and a memory, wherein the program causes the processor to execute: a step of acquiring measurement data from a plurality of sensors configured to measure different items; a step of estimating whether or not there is an abnormality in any of the plurality of sensors, based on the acquired measurement data of the items and measurement data of the items acquired in the past; and a step of correcting measurement data measured by a sensor estimated to have an abnormality, based on the acquired measurement data of the items and the measurement data of the items acquired in the past.

### (Appendix 2)

The program according to (Appendix 1), wherein in the estimating step, whether or not any of the plurality of sensors has failed is estimated based on the acquired measurement data of the items and the measurement data of the items acquired in the past, and in the correcting step, measurement data measured by a sensor estimated to have failed is complemented based on the acquired measurement data of the items and the measurement data of the items acquired in the past.

(Appendix 3) The program according to (Appendix 1) or (Appendix 2), wherein in the estimating step, whether or not any of the plurality of sensors has deviated from a time of calibration is estimated based on the acquired measurement data of the items and the measurement data of the items acquired in the past, and in the correcting step, measurement data measured by a sensor estimated to have deviated from the time of calibration is corrected based on the acquired measurement data of the items and the measurement data of the items acquired in the past.

(Appendix 4) The program according to any one of (Appendix 1) to (Appendix 3), wherein the program causes the processor to execute a step of acquiring measurement data of the items measured by another sensor device configured to measure water of a same water source, and in the estimating step, whether or not there is an abnormality in any of the plurality of sensors is estimated based on the acquired measurement data of the items, the measurement data of the items acquired from the another sensor device, the measurement data of the items acquired in the past, and measurement data of the items acquired in the past from the another sensor device.

### (Appendix 5)

The program according to (Appendix 4), wherein, in the correcting step, measurement data measured by a sensor estimated to have an abnormality is corrected based on the acquired measurement data of the items, the measurement data of the items acquired from the another sensor device, the measurement data of the items acquired in the past, and the measurement data of the items acquired in the past from the another sensor apparatus.

### (Appendix 6)

The program according to any one of (Appendix 1) to (Appendix 5), wherein in the estimating step, whether an abnormality has occurred is estimated by inputting the acquired measurement data of the items to a trained model trained using the measurement data of the items acquired in the past as input data and a determination on whether an abnormality has occurred based on the measurement data as ground truth output data.

### (Appendix 7)

A method executed by a computer comprising a processor and a memory, wherein the processor executes: a step of acquiring measurement data from a plurality of sensors configured to measure different items; a step of estimating whether or not there is an abnormality in any of the plurality of sensors, based on the acquired measurement data of the items and measurement data of the items acquired in the past; and a step of correcting measurement data measured by a sensor estimated to have an abnormality, based on the acquired measurement data of the items and the measurement data of the items acquired in the past.

### (Appendix 8)

An information processing apparatus comprising a control unit and a storage unit, wherein the control unit executes: a step of acquiring measurement data from a plurality of sensors configured to measure different items; a step of estimating whether or not there is an abnormality in any of the plurality of sensors, based on the acquired measurement data of the items and measurement data of the items acquired in the past; and a step of correcting measurement data measured by a sensor estimated to have an abnormality, based on the acquired measurement data of the items and the measurement data of the items acquired in the past.

(Appendix 9) A system comprising: means for acquiring measurement data from a plurality of sensors configured to measure different items; means for estimating whether or not there is an abnormality in any of the plurality of sensors, based on the acquired measurement data of the items and measurement data of the items acquired in the past; and means for correcting measurement data measured by a sensor estimated to have an abnormality, based on the acquired measurement data of the items and the measurement data of the items acquired in the past.

### EXPLANATION OF REFERENCE NUMERALS

1: system
10: sensor device
11: housing
11a: piping connection hole
11b: piping connection hole
11c: piping connection hole
11d: intake port
11e: exhaust port
111: EC sensor
112: FCL sensor
113: pH sensor
1131: pH electrode
1132: substrate
11321: CPU
11322: memory
113221: trained model
11323: amplifier
11324: converter
11325: input/output IF
11326: communication unit
114: ORP sensor
115: NO3 sensor
115a: grip portion
115b: flange portion
115c: measurement portion
116: FLOW sensor
117: TUR sensor
1171: shell
118: TEMP sensor
119: valve
1110: valve
1111: flow cell
11111-11113: measurement ports
11112a: cylindrical portion
11112b: cylindrical portion
11113b: cylindrical portion
11113c: hole
11114: water delivery channel
11115: air release channel
1112: control box
1113: terminal block
1114: terminal block
1115: air release valve
11151: insertion port
1116: drain valve
1117: flow rate adjustment valve
1118: air filter
1119: touch panel
11191: touch sensitive device
11192: display
1120-1122: joints
12: lid
120: communication unit
131: touch sensitive device
141: display
180: storage unit
181: calibration information
182: measurement information
183: sensor measurement information
184: measurement information
185: trained model
190: control unit
191: operation reception unit
192: first transmission/reception unit
193: second transmission/reception unit
194: calibration unit
195: calculation unit
196: estimation unit
197: correction unit
198: complementing unit
199: presentation control unit
20: server
201: communication unit
202: storage unit
2021: plant table
2022: installation table
2023: plant environment table
2024: measurement table
2025: calibration table
2026: model table
2027: first trained model
2028: second trained model
203: control unit
2031: reception control module
2032: transmission control module
2033: storage control module
2034: analysis module
2035: simulation module
2036: calibration setting module
2037: proposal module
2038: training module
2039: presentation module
30: terminal device
80: network
90: computer
91: processor
92: storage device
93: auxiliary storage device
99: communication IF

## Claims

1. A program executed by a computer comprising a processor and a memory, wherein the program causes the processor to execute:
a step of acquiring measurement data from a plurality of sensors configured to measure different items,
a step of estimating whether or not there is an abnormality in any of the plurality of sensors, based on the acquired measurement data of the items and measurement data of the items acquired in the past; and
a step of correcting measurement data measured by a sensor estimated to have an abnormality, based on the acquired measurement data of the items and the measurement data of the items acquired in the past.

2. The program according to claim 1, wherein
in the estimating step, whether or not any of the plurality of sensors has failed is estimated based on the acquired measurement data of the items and the measurement data of the items acquired in the past, and
in the correcting step, measurement data measured by a sensor estimated to have failed is complemented based on the acquired measurement data of the items and the measurement data of the items acquired in the past.

3. The program according to claim 1 or 2, wherein
in the estimating step, whether or not any of the plurality of sensors has deviated from a time of calibration is estimated based on the acquired measurement data of the items and the measurement data of the items acquired in the past, and
in the correcting step, measurement data measured by a sensor estimated to have deviated from the time of calibration is corrected based on the acquired measurement data of the items and the measurement data of the items acquired in the past.

4. The program according to any one of claims 1 to 3, wherein
the program causes the processor to execute a step of acquiring measurement data of the items measured by another sensor device configured to measure water of a same water source, and
in the estimating step, whether or not there is an abnormality in any of the plurality of sensors is estimated based on the acquired measurement data of the items, the measurement data of the items acquired from the another sensor device, the measurement data of the items acquired in the past, and measurement data of the items acquired in the past from the another sensor device.

5. The program according to claim 4, wherein, in the correcting step, measurement data measured by a sensor estimated to have an abnormality is corrected based on the acquired measurement data of the items, the measurement data of the items acquired from the another sensor device, the measurement data of the items acquired in the past, and the measurement data of the items acquired in the past from the another sensor apparatus.

6. The program according to any one of claims 1 to 5, wherein in the estimating step, whether an abnormality has occurred is estimated by inputting the acquired measurement data of the items to a trained model trained using the measurement data of the items acquired in the past as input data and a determination on whether an abnormality has occurred based on the measurement data as ground truth output data.

7. A method executed by a computer comprising a processor and a memory, wherein the processor executes:
a step of acquiring measurement data from a plurality of sensors configured to measure different items;
a step of estimating whether or not there is an abnormality in any of the plurality of sensors, based on the acquired measurement data of the items and measurement data of the items acquired in the past; and
a step of correcting measurement data measured by a sensor estimated to have an abnormality, based on the acquired measurement data of the items and the measurement data of the items acquired in the past.

8. An information processing apparatus comprising a control unit and a storage unit, wherein the control unit is configured to perform:
a step of acquiring measurement data from a plurality of sensors configured to measure different items;
a step of estimating whether or not there is an abnormality in any of the plurality of sensors, based on the acquired measurement data of the items and measurement data of the items acquired in the past; and
a step of correcting measurement data measured by a sensor estimated to have an abnormality, based on the acquired measurement data of the items and the measurement data of the items acquired in the past.

9. A system comprising:
means for acquiring measurement data from a plurality of sensors configured to measure different items;
means for estimating whether or not there is an abnormality in any of the plurality of sensors, based on the acquired measurement data of the items and measurement data of the items acquired in the past; and
means for correcting measurement data measured by a sensor estimated to have an abnormality, based on the acquired measurement data of the items and the measurement data of the items acquired in the past.
